(19) **Europäisches Patentamt / European Patent Office / Office européen des brevets**

(11) **EP 2 256 168 B1**

(12) **EUROPEAN PATENT SPECIFICATION**

(45) Date of publication and mention of the grant of the patent:
**02.01.2013 Bulletin 2013/01**

(21) Application number: **09711290.8**

(22) Date of filing: **10.02.2009**

(51) Int Cl.:
**C08K 3/22** (2006.01)      **D01F 6/60** (2006.01)
**D01F 1/07** (2006.01)      **C08L 77/10** (2006.01)
**C08G 69/32** (2006.01)      **C08K 9/02** (2006.01)
**A41D 13/00** (2006.01)      **A62B 17/00** (2006.01)
**D02G 3/44** (2006.01)      **D03D 15/12** (2006.01)

(86) International application number:
**PCT/JP2009/052209**

(87) International publication number:
**WO 2009/101930 (20.08.2009 Gazette 2009/34)**

(54) **FLAME-RETARDANT RESIN COMPOSITION, FLAME-RETARDANT FIBER, FLAME-RETARDANT CLOTH, AND HEAT-RESISTANT PROTECTIVE CLOTHING**

FLAMMWIDRIGE HARZZUSAMMENSETZUNG, FLAMMWIDRIGE FASER, FLAMMWIDRIGES TUCH UND HITZEFESTE SCHUTZKLEIDUNG

COMPOSITION DE RÉSINE IGNIFUGE, FIBRE IGNIFUGE, ÉTOFFE IGNIFUGE ET VÊTEMENT PROTECTEUR RÉSISTANT À LA CHALEUR

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.02.2008   JP 2008030787**
**12.02.2008   JP 2008030788**
**12.02.2008   JP 2008030789**

(43) Date of publication of application:
**01.12.2010   Bulletin 2010/48**

(73) Proprietor: **Teijin Limited**
**Osaka-shi, Osaka 541-0054 (JP)**

(72) Inventors:
- **YAGURA, Yasushige**
  **Matsuyama-shi**
  **Ehime 791-8041 (JP)**
- **ISHIHARA, Shigeru**
  **Matsuyama-shi**
  **Ehime 791-8041 (JP)**
- **OZAKI, Hiromi**
  **Ibaraki-shi**
  **Osaka 567-0006 (JP)**
- **WADA, Noriko**
  **Ibaraki-shi**
  **Osaka 567-0006 (JP)**
- **IZAWA, Hajime**
  **Ibaraki-shi**
  **Osaka 567-0006 (JP)**
- **SASABE, Shuji**
  **Hirakata-shi**
  **Osaka 573-1132 (JP)**
- **TAKEBAYASHI, Kenji**
  **Hirakata-shi**
  **Osaka 573-1132 (JP)**

(74) Representative: **Hallybone, Huw George et al**
**Carpmaels & Ransford**
**One Southampton Row**
**London**
**WC1B 5HA (GB)**

(56) References cited:
WO-A1-00/73370      JP-A- 6 065 475
JP-A- 6 191 848      JP-A- 9 156 919
JP-A- 11 174 721      JP-A- 50 115 190
JP-A- 53 051 250      JP-A- 55 151 041
JP-A- 2000 169 652      JP-A- 2001 234 082
JP-A- 2002 121 390      JP-A- 2004 210 586
JP-A- 2005 272 298      US-A- 5 319 013
US-A1- 2006 147 713

**Description**

Technical Field

The present invention relates to a flame-retardant resin composition containing novel composite particles mainly composed of titanium dioxide and silicon dioxide in a resin or a fiber-forming polymer which is an aromatic polyamide, a flame-retardant fiber using the flame-retardant resin composition, a flame-retardant cloth using the flameretardant fiber and heat-resistant protective clothing.

Background Art

It has hitherto been well known that aromatic polyamides produced from aromatic diamines and aromatic dicarboxylic dihalides are excellent in heat resistance and flame retardancy. Further, it has also been known that these aromatic polyamides are soluble in amide-based polar solvents, and that fibers can be made by methods such as dry spinning, wet spinning and semi-dry semi-wet spinning from polymer solutions obtained by dissolving the aromatic polyamides in the solvents (patent documents 1 to 8). These aromatic polyamide resins are particularly useful for heat-resistant and flame-retardant fibers, and have been used in fields exerting these characteristics, for example, for industrial applications such as filters and electronic parts, disaster prevention and safe clothing applications such as protective clothing attaching importance to heat resistance, flameproofness and flame resistance, and the like.

Above all, the protective clothing has been widely used as heat-resistant protective clothing worn in front of high-temperature furnaces such as blast furnaces, electric furnaces and incinerators, fire clothing for persons engaging in fire-extinguishing operations, welding protective clothing for welding operations exposed to high-temperature sparks, flame-retardant working wears for persons handling chemicals having strong inflammability, and the like. In particular, it has been recognized that meta-type aromatic polyamide fibers are more excellent in terms of processability, wear comfort, washability, clothing properties and the like as protective clothing materials than glass fibers, phenol resin fibers, metal foil coating materials and the like which have hitherto been used in protective clothing, because general yarn qualities thereof are very similar to those of apparel fibers, for example, natural fibers such as cotton and wool and synthetic fibers such as nylon, polyester and acrylic fibers, in addition to excellent heat-resistance, flame-retardancy and self-digestion properties thereof.

However, these existing fibers have limitation on flame retardancy, so that this also causes limitation on the ranges of fire fighting and lifesaving effort. Accordingly, when the flame retardancy of the conventional protective clothing materials is dramatically improved, for example, in the fire fighting, it becomes possible to perform the fire fighting and rescue effort by entering the inside of a fire scene in an early stage, regardless of the progress of a fire, and it becomes possible to extinguish a fire in an early stage by approaching to a fire source and directly pouring water, even when the fire is at its peak. Merits of substantially decreasing a water loss in the fire fighting, realizing rapid and early rescue, improving safety of firefighters, and the like are expected thereby.

Conventionally, there has been proposed a method of adding an organic phosphorus compound, a phosphoruscontaining phenol resin, a halogen compound or the like to a polymer, in order to improve flame retardancy of a resin, and there has been proposed a method of blending a halogen atom-containing organic phosphorus compound to improve flame retardancy (see patent document 9). However, these are low-molecular-weight organic compounds, so that these have a problem that parts thereof are discharged in fiber-forming processing. These contain halogen, so that these have a problem of opposing the recent movement of dehalogenation fearing environmental issues.

Further, it has been known that heat resistance and flame retardancy are improved by using a fibrous or acicular inorganic filler as a flame retardant for the purpose of improving heat resistance and flame retardancy. For example, there is disclosed a polyamide resin in which magnesium hydroxide and an elastomer are allowed to be contained in a polyamide resin in amounts of 30% or more by weight and 3 to 20% by weight, respectively, thereby improving flame retardancy (see the following patent document 10).

However, in order to improve flame retardancy of fiber by adding a metal hydroxide, it is required to be added in large amounts. As a result, mechanical properties such as strength and elastic modulus decrease, and production stability significantly decreases in a molding process in some cases. It is therefore not necessarily the case that the improvement of flame retardancy and the mechanical properties are compatible.

Further, conventionally, in order to improve flame retardancy of fiber, there have been proposed a halogen-containing polymer or a fiber structure in which an organic phosphorus compound is contained in a polymer as described in patent document 11 (JP-A-2007-177369) and a method of containing a triazine-based compound as described in patent document 12 (JP-A-2007-56392). Furthermore, a method of containing a phenyl group has also been shown in patent document 13 (JP-A-2006-299472). However, these are low-molecularweight organic compounds, so that these have a problem that parts thereof are discharged in fiber-forming processing. These contain halogen, so that these have a problem of opposing the recent movement of dehalogenation fearing environmental issues.

[Patent Document 1] JP-B-35-14399
[Patent Document 2] JP-B-47-10863
[Patent Document 3] JP-B-48-17551
[Patent Document 4] JP-A-50-52167
[Patent Document 5] JP-A-56-31009
[Patent Document 6] JP-A-8-074121
[Patent Document 7] JP-A-10-88421
[Patent Document 8] JP-A-2001-348726
[Patent Document 9] JP-A-53-122817
[Patent Document 10] JP-A-11-100499
[Patent Document 11] JP-A-2007-177369
[Patent Document 12] JP-A-2007-56392
[Patent Document 13] JP-A-2006-299472

Disclosure of the Invention

Problems That the Invention Is to Solve

The present invention has been made in order to solve the problems of the conventional art as described above, and provides a resin composition having excellent flame retardancy without deteriorating mechanical properties, a flameretardant fiber having excellent fiber-making stability and excellent flame retardancy without deteriorating mechanical properties, further, a heat-resistant cloth using a flame-retardant fiber containing optimum composite particles in small amounts, and heat-resistant protective clothing using this cloth.

Means for Solving the Problems

The present invention relates to a flame-retardant resin composition comprising a resin and composite particles in an amount of 1% by weight or more based on the resin, which are mainly composed of titanium dioxide and silicon dioxide and have a titanium dioxide content of 10 to 30% by weight and a silicon dioxide content of 70 to 90% by weight, wherein the resin is an aromatic polyamide.
Then, the present invention relates to a flame-retardant fiber obtained by fiberizing the above-mentioned flameretardant resin composition, which comprises composite particles in the fiber in an amount of 1 to 30% by weight, which are mainly composed of titanium dioxide and silicon dioxide and have a titanium dioxide content of 10 to 30% by weight and a silicon dioxide content of 70 to 90% by weight,.
Next, the present invention relates to a heat-resistant cloth using the above-mentioned flame-retardant fiber, and heat-resistant protective clothing using the heat-resistant cloth.
Incidentally, in the composite particles used in the present invention, the terminology "mainly composed of titanium dioxide and silicon dioxide" means that total content of titanium dioxide and silicon dioxide is 80% by weight or more, and other metal oxides as described later may be contained.
Here, as the resin used in the above-mentioned composition and fiber, is an aromatic polyamide.
Further, the flame-retardant resin composition, the flame-retardant fiber and the heat-resistant cloth of the present invention preferably have a limiting oxygen index of 30 or more.
Still further, each of the above-mentioned composite particles is preferably one comprising a core composed of titanium dioxide and a covering layer of silicon dioxide formed on an outer surface thereof.
Yet still further, the above-mentioned composite particle is preferably one further having a surface treatment layer.
Furthermore, the above-mentioned surface treatment layer is preferably one composed of a silane-based coupling agent.
In addition, the dispersed particle average corresponding size of the above-mentioned composite particles in the flame-retardant resin composition and the flameretardant fiber of the present invention is preferably within the range of 10 to 200 nm.

Advantages of the Invention

The flame-retardant resin composition of the present invention contains composite particles comprising a composition of 10 to 30% by weight of titanium dioxide and 70 to 90% by weight of silicon dioxide, and even when the composite particles are added in small amounts, the composition shows such extremely excellent flame retardancy that the limiting oxygen index as a measure of flame retardancy is 30 or more. Compared to conventional resin compositions, flame retardancy can be dramatically improved. Accordingly, various products having excellent flame retardancy can be provided.

Further, the flame-retardant fiber and the flameretardant cloth of the present invention shows such extremely excellent flame retardancy that the limiting oxygen index as a measure of flame retardancy, that is to say, the LOI value, is 30 or more, even when the composite particles comprising a composition of 10 to 30% by weight of titanium dioxide and 70 to 90% by weight of silicon dioxide are added in small amounts. Thus, flame retardancy can be dramatically improved without deteriorating mechanical characteristics of fiber, so that various textile products having excellent flame retardancy can be provided. In particular, the present invention is extremely useful in material development for protective clothing applications.

Brief Description of the Drawings

[Fig. 1] Fig. 1 is schematic views of composite particles used in the present invention.
[Fig. 2] Fig. 2 is a cross-sectional view showing an overall structure of a production apparatus of composite particles.
[Fig. 3] Figs. 3a and 3b are cross-sectional and front views, respectively, schematically showing a structure of a nozzle unit.
[Fig. 4] Fig. 4 is an illustrative view for illustrating a forming process of composite particles.

Description of Reference Numerals and Signs

1: Composite particle
3: Core
5: Covering layer
7: Surface treatment layer
11: Composite particle production apparatus
27: Nozzle unit
HK: Reaction space
GR: Reaction gas flow
ET: Raw material gas flow

Best Mode for Carrying Out the Invention

Embodiments of the present invention will be described below.
First, materials (a resin, a fiber-forming polymer, a composite particle and the like) used in the present invention will be described, and further, a flame-retardant resin composition, a flame-retardant fiber, a heat-resistant cloth and heat-resistant protective clothing of the present invention will be described.

[Materials Used in the Present Invention]

<Resin or Fiber-Forming Polymer>

As the resin used in the resin composition of the present invention, are aromatic polyamides such as polymetaphenylene isophthalamide and polyparaphenylene terephthalamide, and the like. In order to develop the flame-retardant resin composition of the present invention in protective clothing applications and the like, aromatic polyamides are desirable.
Further, in the present invention, the polymer constituting the fiber is a fiberforming polymer (hereinafter also briefly referred to as a polymer). The fiber-forming polymers are aromatic polyamides such as polymetaphenylene isophthalamide and polyparaphenylene terephthalamide, and the like. In order to develop the composition in protective clothing applications and the like, aromatic polyamides are desirable.
Here, the aromatic polyamide in the present invention can be obtained from low-temperature solution polymerization or interfacial polymerization of a dicarboxylic acid dichloride (hereinafter also referred to as an "acid chloride") and a diamine in a solution.
Specifically, the diamines used in the present invention include but are not limited to one or two or more of p-phenylenediamine, 2-chloro-p-phenylenediamine, 2,5-dichloro-p-phenylenediamine, 2,6-dichloro-p-phenylenediamine, m-phenylenediamine, 3,4'-diaminodiphenylether, 4,4'-diaminodiphenylether, 4,4'-diaminodiphenylmethane, 4,4'-diaminodiphenylsulfone, 3,3'-diaminodiphenylsulfone and the like.

Above all, one or two or more of p-phenylenediamine, m-phenylenediamine and 3,4'-diaminodiphenylether can be used as the diamines.

Further, specifically, the acid chlorides used in the present invention include but are not limited to, for example, isophthalic acid chloride, terephthalic acid chloride, 2-chloroterephthalic acid chloride, 2, 5-dichloroterephthalic acid chloride, 2,6-dichloroterephthalic acid chloride, 2,6-naphthalenedicarboxylic acid chloride and the like. Above all, terephthalic acid dichloride and isophthalic acid dichloride are preferred as the acid chlorides.

Accordingly, examples of the aromatic polyamides in the present invention include copolyparaphenylene-3,4'-oxy-diphenyleneterephthalamide, polyparaphenyleneterephthalamide, polymetaphenyleneterephthalamide and the like.

The solvents in polymerizing the aromatic polyamide specifically include organic polar amide-based solvents such as N,N-dimethylformamide, N,N-dimethylacetamide, N-methyl--2-pyrrolidone and N-methylcaprolactam, water-soluble ether compounds such as tetrahydrofuran and dioxane, water-soluble alcoholic compounds such as methanol, ethanol and ethylene glycol, water-soluble ketone-based compounds such as acetone and methyl ethyl ketone, water-soluble nitrile compounds such as acetonitrile and propionitrile, and the like. These solvents can be used as a mixed solvent composed of two or more kinds of solvents, and are not particularly limited. The above-mentioned solvents are desirably dehydrated.

In this case, in order to increase solubility, a generally known inorganic salt may be added in an appropriate amount, before, during or at the end of polymerization. Such inorganic salts include, for example, lithium chloride, calcium chloride and the like.

The polymer concentration of the aromatic polyamide solution used in the production of the aromatic polyamide of the present invention is preferably from 0.5 to 30% by weight, and more preferably from 1 to 10% by weight. When the polymer concentration is less than 0.5% by weight, polymer entanglement decreases, and, for example, the viscosity necessary for spinning is not obtained. On the other hand, when the polymer concentration exceeds 30% by weight, for example, an unstable flow is liable to occur in spinning from a nozzle, resulting in a difficulty of performing stable spinning.

Further, in the production of the aromatic polyamide, these diamines and acid chlorides are preferably used at a diamine-acid chloride molar ratio of preferably 0.90 to 1.10, and more preferably 0.95 to 1.05.

A terminal of this aromatic polyamide can also be blocked. When blocking is performed by using a terminal blocking agent, the terminal blocking agent includes, for example, phthalic acid chloride and substituted compounds thereof, and amine components such as aniline and substituted compounds thereof.

In a reaction of the acid chloride and the diamine generally used, in order to capture an acid such as hydrogen chloride produced, an aliphatic or aromatic amine or a quaternary ammonium salt can be used together.

After the reaction is finished, a basic inorganic compound, for example, sodium hydroxide, potassium hydroxide, calcium hydroxide or calcium oxide, is added as needed to conduct a neutralization reaction.

Any particular limitation is not required for reaction conditions. The reaction of the acid chloride and the diamine is generally rapid, and the reaction temperature is, for example, from -25°C to 100°C, and preferably from -10°C to 80°C. The aromatic polyamide thus obtained is poured into a non-solvent such as alcohol or water to precipitate the polyamide, and can be taken out in a pulp form. This can also be dissolved in another solvent again, and subjected to forming. However, the solution obtained by the polymerization reaction can be used as a solution for forming as it is. The solvent used when the polyamide is dissolved again is not particularly limited as long as it dissolves the aromatic polyamide. However, the solvent used in the above-mentioned aromatic polyamide polymerization is preferred.

<Composite Particles>

Then, the composite particles used in the present invention are mainly composed of titanium dioxide and silicon dioxide, and have a titanium dioxide content of 10 to 30% by weight and a silicon dioxide content of 70 to 90% by weight.

In the present invention, the composite particles mainly composed of titanium dioxide and silicon dioxide are used, thereby being able to impart certain flame retardancy to the resin and the fiber. At this time, the titanium dioxide and silicon dioxide contents in the composite particles are adjusted to 10 to 30% by weight for titanium dioxide and 70 to 90% by weight for silicon dioxide, thereby being able to impart excellent flame retardancy to the resin and the fiber. In that case, it has been confirmed that even when the amount of the composite particles blended into the resin and the fiber is small, flame retardancy is improved. For this reason, the amount of the composite particles blended into the resin and the fiber can be decreased while maintaining high flame retardancy. Accordingly, there can be provided the flame-retardant resin composition and the flame-retardant fiber to which high flame retardancy can be imparted by such an amount blended that mechanical characteristics of the resin and the fiber are not deteriorated.

Incidentally, as the composite particles whose flame retardancy can be improved by a small amount thereof blended into the resin as described above, ones each comprising a core composed of titanium dioxide and a covering layer of silicon dioxide formed on an outer surface thereof is suitably used, although the detailed mechanism is not clear.

Here, starting raw materials for titanium dioxide and silicon dioxide constituting the composite particles of the present invention include but are not limited to, for example, corresponding metal alkoxides and the like.

The above-mentioned raw materials for titanium dioxide also include chelate compounds such as diethoxytitanium bisacetylacetonate, dipropoxytitanium bisacetylacetonate and dibutoxytitanium bisacetylacetonate, as well as titanium alkoxides such as titanium tetraethoxide, titanium tetran-propoxide, titanium tetra-i-propoxide (tetraisopropyl titanate), titanium tetra-n-butoxide, titanium tetra-secbutoxide, titanium tetra-tert-butoxide and tetra(2-ethylhexyl) titanate.

Further, as the raw materials for silicon dioxide, there are also used, for example, silicon oils such as polymethylsiloxane, as well as silicon alkoxides such as tetramethoxysilane, tetraethoxysilane, metyltrimethoxysilane, metyltriethoxysilane, octamethylcyclotetrasiloxane, dimethyldimethoxysilane, γ-glycidoxypropyltrimethoxysilane, β-(3,4-epoxycyclohexyl)ethyltrimethoxysilane, vinyltrimethoxysilane, N-(β-aminoethyl)-γ-aminopropyltrimethoxysilane, N-(β-aminoethyl)-γ-aminopropylmethyldimethoxysilane, γ-aminopropyltriethoxysilane, acryloylpropyltrimethoxysilane and methacryloylpropyltrimethoxysilane.

Further, it is suitable that the above-mentioned composite particle further has a surface treatment layer surface-treated with a silane-based coupling agent or a titanium-based coupling agent, preferably a coupling agent such as silane-based coupling agent, or a surface treatment agent such as a surfactant.

This surface treatment agent is present on a surface of the covering layer to form the surface treatment layer. Thus, the surface state of the surface treatment layer of the composite particle is adjusted by properly selecting the kind of surface treatment agent to improve affinity with the resin (fiber-forming polymer), resulting in improved dispersibility of the composite particles into the resin (fiber-forming polymer), whereby high flame retardancy is imparted by a small amount thereof blended.

The silane-based coupling agents as used herein include a silane-based coupling agent represented by the following formula (I):

$$(R^1)_n\text{- Si -}X_{(4-n)} \qquad (I)$$

wherein $R^1$ is an organic group having 1 to 300 carbon atoms, which may contain a hetero atom such as N, O, S or halogen, and X is an alkoxyl group such as $OR^2$ or a halogen atom, wherein $R^2$ is an organic group having 1 to 18 carbon atoms.

$R^1$ specifically includes aliphatic alkyl groups such as an ethyl group, a propyl group, an isopropyl group, a butyl group, a pentyl group and a hexyl group, alicyclic groups such as a cyclohexyl group, and further, aromatic groups such as a phenyl group, a toluyl group and a naphthyl group. Further, these may further contain a hetero atom such as N, O, S or halogen. Groups in such a case include an amino group, a chloro group, a bromo group, a cyano group, an acid anhydride, an epoxy group, a mercapto group and the like. $R^2$ of $OR^2$ contained in X includes a methyl group, an ethyl group, a propyl group and the like.

Specific compounds of such silane-based coupling agents represented by formula (I) include, for example, silane-based coupling agents such as methyltrimethoxysilane, methyltriethoxysilane, n-propyltrimethoxysilane, n-propyltriethoxysilane, n-butyltrimethoxysilane, n-butyltriethoxysilane, n-pentyltrimethoxysilane, n-pentyltriethoxysilane, n-hexyltrimethoxysilane, n-hexyltriethoxysilane, phenyltrimethoxysilane, phenyltriethoxysilane, naphthyltrimethoxysilane, toluyltrimethoxysilane, toluyltriethoxysilane, 3-aminopropyltrimethoxysilane, 3-aminopropyldimethylmethoxysilane, 3-aminopropylmethyldimethoxysilane, 3-aminopropyltriethoxysilane, 3-aminopropyldimethylethoxysilane, 3-aminopropylmethyldiethoxysilane, p-aminophenyltrimethoxysilane, p-aminophenyltriethoxysilane, 3-cyanoethylmethyldimethoxysilane, 3-cyanoethyltrimethoxysilane, 3-cyanomethyltrimethoxysilane, 3-cyanopropyltrimethoxysilane, 3-cyanopropyltriethoxysilane, 3-(triethoxysilyl)propylsuccinic anhydride, 2-(3,4-epoxycyclohexyl)ethyltriethoxysilane, 2,3,4-epoxycyclohexyl)ethyltrimethoxysilane, 5,6-epoxy-hexyltriethoxysilane, 3-mercaptopropyltrimethoxysilane, 3-mercaptopropyltriethoxysilane, 2-mercaptoethyltrimethoxysilane, 2-mercaptoethyltriethoxysilane, 3-nitro-propyltrimethoxysilane, 3-nitropropyltriethoxysilane, 3-chloropropyltrimethoxysilane, 3-bromopropyltrimethoxysilane, 3-bromopropyltriethoxysilane, 3-chloropropyltriethoxysilane, 2-chloroethyltrimethoxysilane, 2-chloroethyltriethoxysilane, 3-triethoxysilylpropylmethacrylate monosulfide, 3-trimethoxysilylpropylmethacrylate monosulfide, 3-mercaptopropyldimethoxymethylsilane, 3-nitropropyldimethoxymethylsilane, 3-chloropropyldimethoxymethylsilane, 11-bromoundecyltrimethoxysilane, 11-bromoundecyltrichlorosilane, 11-bromoundecyldimethylchlorosilane and imidazolesilanes described in paragraphs [0079] to [0085] of JP-A-2006-124698.

Of these silane-based coupling agents, epoxysilanes, aminosilanes, imidazolesilanes and alkoxysilanes are preferred. These silane-based coupling agents can be used either alone or as a combination of two or more thereof.

The silane-based coupling agent can extremely improve dispersibility of the composite particles, so that high flame retardancy can be imparted to the resulting resin composition and fiber by a small amount of the composite particles blended.

Further, as the surfactants, there can be used ionic surfactants, nonionic surfactants and the like. Here, as the ionic surfactants, there can be utilized anionic surfactants such as fatty acid-based and phosphoric acid-based surfactants, cationic surfactants such as ammonium-based surfactants, and ampholytic surfactants such as carboxylic acid-based and phosphoric acid ester-based surfactants. As the nonionic surfactants, there can be used carboxylic acid-based and phosphoric acid ester-based surfactants.

Incidentally, the average particle size measured by a dynamic light scattering method of the composite particles used in the present invention is usually from 10 to 500 nm, and preferably from 10 to 200 nm. The average particle size used herein is a value measured by the dynamic light scattering method in a state where the composite particles are dispersed in a dispersing medium at a concentration of 5% by weight.

When the average particle size of the composite particles is within the above-mentioned range, the composite particles themselves are extremely fine. Accordingly, the number of the composite particles per weight or the surface area thereof can be substantially increased, so that high flame retardancy can be imparted to the resulting resin composition and fiber even by a small amount of the composite particles blended.

Embodiments of the composite particles of the present invention will be described below with reference to the drawings.

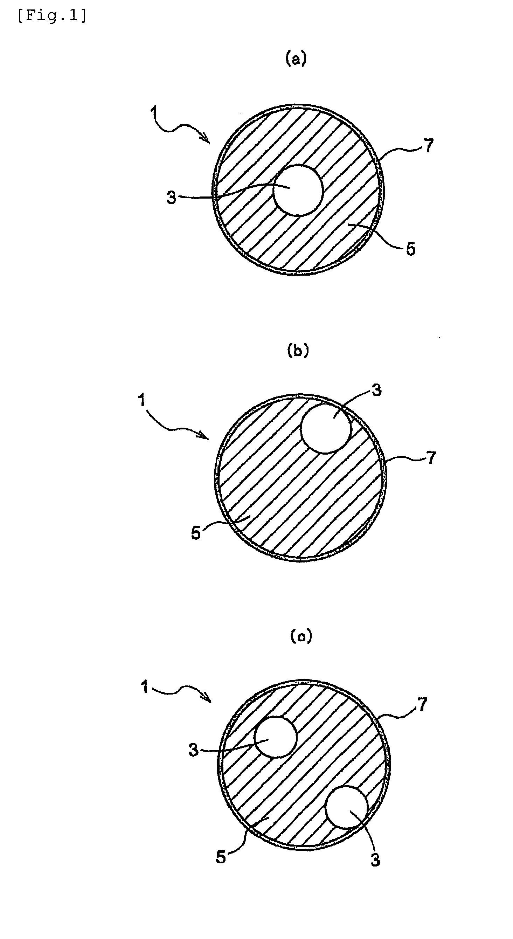

Fig. 1 is schematic views conceptually showing examples of composite particles 1 used in the present invention.

As shown in this drawing, the composite particle 1 comprises a core 3 composed of titanium dioxide and a covering layer 5 of silicon dioxide formed on an outer surface thereof.

The core 3 is constituted by titanium dioxide. The above-mentioned titanium dioxide may have a crystalline structure of either a rutile type or an anatase type. The ratio of the rutile type and the anatase type varies depending on the treating temperature and the like. In general, the ratio of the rutile type increases when a high-temperature treatment is performed, and the ratio of the anatase type increases when a low-temperature treatment is performed. Incidentally, titanium dioxide may be one containing only either of the rutile type and anatase type crystalline structures.

The covering layer 5 is constituted by silicon dioxide. Silicon dioxide constituting the covering layer 5 has no particular crystalline structure, is in an amorphous state, and covers the core 3 composed of titanium dioxide. It is preferred that the covering layer 5 completely covers one core 3 composed of titanium dioxide, as shown in Fig. 1 (a). However, it may partially cover one core 3, as shown in Fig. 1(b), and may cover a plurality of cores 3, as shown in Fig. 1(c).

Here, the ratios of titanium dioxide and silicon dioxide of the composite particle 1 are from 10 to 30% by weight and from 70 to 90% by weight, respectively. When titanium dioxide is less than 10% by weight (silicon dioxide exceeds 90% by weight) or exceeds 30% by weight (silicon dioxide is less than 70% by weight), no predetermined flame retardancy-improving effect is exerted.

Incidentally, in addition to the composite particle composed of titanium dioxide and silicon dioxide, a small amount of another metal oxide may be contained in the composite particle used in the present invention. For example, there may be contained cesium oxide, zinc oxide, cerium oxide, magnesium oxide, manganese oxide, iron oxide, aluminum oxide, lithium oxide, sodium oxide, potassium oxide, vanadium oxide, chromium oxide, cobalt oxide, nickel oxide, copper oxide or the like.

The composite particle 1 used in the present invention further has a surface treatment layer 7. This surface treatment layer 7 is constituted, for example, by a known coupling agent such as a silane-based coupling agent or titanium-based coupling agent, and the coupling agent is present on a surface of the covering layer 5 to form the surface treatment layer 7. As the coupling agent, there can be used a known coupling agent, for example, such as a titanate-based or silane-based coupling agent. The silane-based coupling agent is preferred. The silane-based coupling agents preferably include silane monomers, vinylsilanes, aminosilanes, isocyanate silanes and the like. This silane-based coupling agent hydrophobizes surfaces of the composite particles 1 to improve affinity with the resin, thereby being able to improve dispersibility of the composite particles 1 into the resin.

The composite particles 1 used in the present invention have an average particle size of 10 to 500 nm. The above-mentioned average particle size as used herein is a value measured by the dynamic light scattering method in a state where the composite particles 1 are dispersed in a dispersing medium at a concentration of 5% by weight. Incidentally, the composite particles 1 in the dispersing medium are not necessarily dispersed to primary particles, and ones in an aggregated state are also present. For the composite particle 1 in the aggregated state, the average particle size is determined, taking the size of an aggregate as the particle size of the composite particle 1. That is to say, in the present invention, the term "average particle size" is construed as meaning the average value of the primary particles or aggregates of the composite particles 1 in the dispersing medium. When the composite particles 1 are extremely finely formed as described above, the number of the composite particles 1 per weight or the surface area thereof can be substantially increased. Accordingly, it becomes possible to decrease the amount of the composite particles blended for imparting flame retardancy to the resin. Further, when the average particle size is adjusted to 10 to 200 nm, the number of the composite particles 1 per weight or the surface area thereof can be more increased. This is therefore more preferred.

Specific examples of the methods for producing composite particles used in the present invention will be described below.

The composite particles 1 used in the present invention can be produced by either a liquid phase method or a gas phase method. As the liquid phase method, there can be utilized a known method such as a coprecipitation method, a hydrolysis method, an alkoxide method, a sol-gel method, a hydrothermal synthesis method or a polymerization method. Further, as the gas phase method, there can be utilized a known method such as an electric furnace heating method, a burning method, a plasma method or a laser method.

In the present invention, an example of producing the composite particles by using NanoCreator, a gas phase method apparatus manufactured by Hosokawa Micron Corporation, will be described as an example.

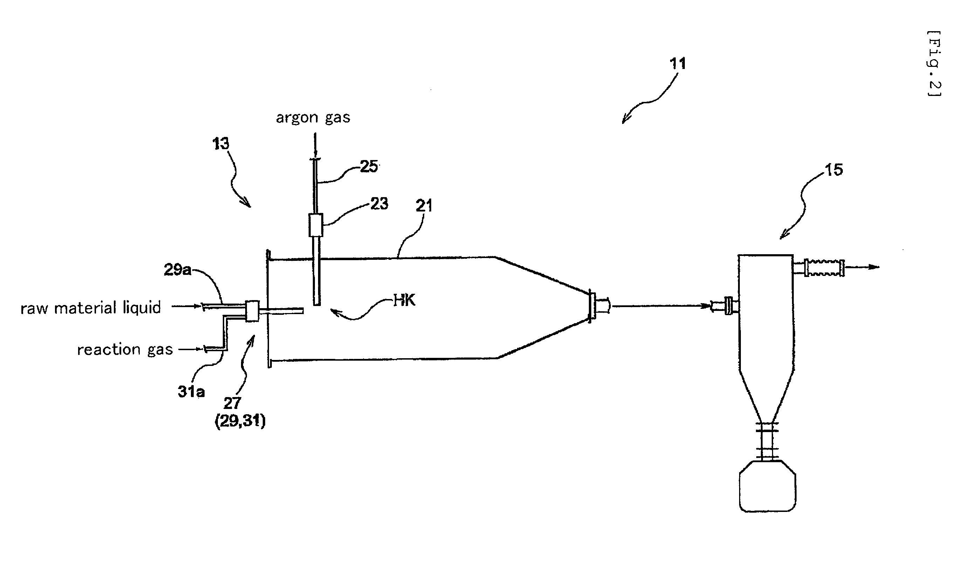

Fig. 2 shows a composite particle production apparatus 11 (NanoCreator) used for the production of the composite particles of the present invention. The composite particle production apparatus 11 is constituted by a reactor 13, a recovery unit 15 for cooling and recovering composite particles 1 formed in the reactor 13, and the like. Incidentally, the composite particles which are fine particles discharged from the reactor 13 is cooled by passing through a cooling unit, and then, recovered by a recovery equipment such as a bag filter, a cyclone separator or an electric dust collector attached to the recovery unit 15, although not shown.

The reactor 13 is equipped with a cylindrical vessel 21 whose particle outlet is formed in a taper shape, and a plasma generator 23 as a heat source for generating a reaction space HK of a high-temperature atmosphere in the inside of the vessel 21 is placed at an upper portion of the vessel 21. Argon gas is supplied to the plasma generator 23 through a supply tube 25. A gas supplied to the plasma generator 23 may be a mixed gas in which, for example, about 20% helium gas, hydrogen gas or nitrogen gas is added to the argon gas, not the argon gas alone. That is to say, the thermal conductivity varies depending on the kind of gas, so that the temperature of plasma can be controlled by changing the composition of the gas supplied to the plasma generator 23. Incidentally, a gas burner or the like may be used as the heat source in place of the plasma generator 23.

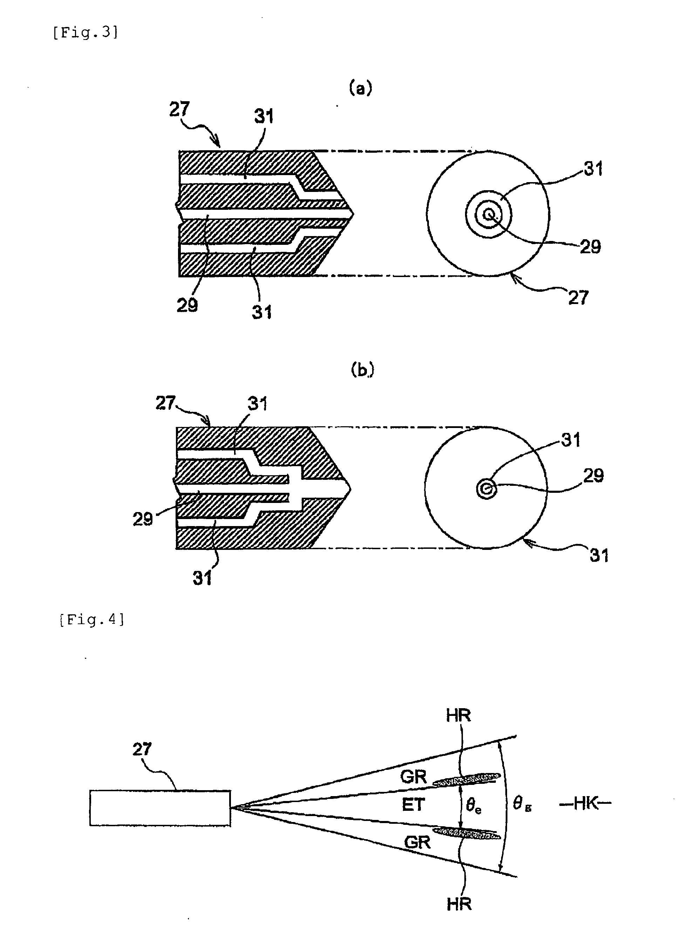

One nozzle unit 27 is mounted on a wall surface of the vessel 21 in a plasma flame direction. As shown in Fig. 3, the nozzle unit 27 is provided with a liquid nozzle 29 for ejecting a raw material liquid containing titanium and silicon, and a gas nozzle 31 positioned around the liquid nozzle 29 for ejecting along an axial center direction a reaction gas which forms a reaction gas flow GR. As the reaction gas used herein, there is used, for example, oxygen gas or air. As the raw material liquid, there is used a solution of an organic metal salt containing titanium and silicon, and the like. Incidentally, to the gas nozzle 31, the reaction gas is supplied from a gas supply tube 31a, and to the liquid nozzle 29, the raw material liquid is supplied from a liquid supply tube 29a.

As shown in Fig. 3, the gas nozzle 31 is formed concentrically to the liquid nozzle 29, when viewed in an axial center direction of the liquid nozzle 29. Specifically, the liquid nozzle 29 is formed in a circle, and the gas nozzle 31 is formed in an annular shape centered on the circular liquid nozzle 29. Incidentally, Fig. 3(a) shows a gas-liquid external mixing type, and Fig. 3(b) shows a gas-liquid internal mixing type. Further, the structure of the nozzle unit 27 is not limited, for example, to a structure in which flow passages for the liquid nozzle 29 and the gas nozzle 31 are formed in a single member having a cylindrical shape or the like, and may be a nozzle unit 27 in which, for example, one liquid nozzle 29 is disposed at the center and a plurality of gas nozzles 31 formed separately from the liquid nozzle 29 are symmetrically arranged around the liquid nozzle 29.

The production method of the composite particles 1 by using NanoCreator will be described below. First, the raw material liquid containing titanium and silicon is prepared by mixing at a predetermined ratio (a first step). The term "predetermined ratio" as used herein is such a ratio that the contents of titanium dioxide and silicon dioxide after the formation of the composite particles 1 become 10 to 30% by weight and 70 to 90% by weight, respectively.

Then, the raw material liquid mixed in the first step is allowed to come into the reaction space HK of a hightemperature atmosphere together with the reaction gas (a second step). The raw material liquid is ejected into the reaction space HK of a high-temperature atmosphere here in a state where it is positioned in the inside of the reaction gas flow GR, and evaporated to make a raw material gas flow ET. That is to say, when the raw material liquid ejected moves in the inside of the reaction space HK, it is vaporized and evaporated to change to the raw material gas flow ET in association with an increase in temperature. Accordingly, of the flow portion indicated by ET, a left base side is a region in a droplet state, and a right top side is a region in a gas state. In Fig. 4, the numeral 27 designates the nozzle unit for forming the raw material gas flow ET and the reaction gas flow GR. The spread angle θg of a circular cone of the reaction gas flow GR is formed so as to become larger than the spread angle θe of a circular cone of the raw material gas flow ET by this nozzle unit 27.

When the raw material liquid comes as the raw material gas flow ET into the reaction space HK, the core 3 composed of titanium dioxide is first formed as a precursor particle by a thermal reaction in a reaction region HR generated in an outer circumferential portion of the raw material gas flow ET (specifically, in the vicinity of an interface of the reaction gas flow GR in contact with the raw material gas flow ET). The above-mentioned precursor particle forms the covering layer 5 of silicon dioxide while moving in the reaction region HR at a rate equivalent to the transfer rate of the reaction gas flow GR, thereby forming the composite particle 1 (a third step). Finally, the composite particle 1 formed in the third step is cooled by the reaction gas flow GR formed by the above-mentioned reaction gas (a fourth step). The composite particle 1 thus produced becomes one having the core 3 composed of titanium dioxide and the covering layer 5 of silicon dioxide.

Incidentally, the size of the reaction region HR formed in the reaction space HK can be controlled by changing and setting the ratio of the flow rate of the reaction gas flow GR to the flow rate of the raw material gas flow ET. The retention time of the formed precursor particle and composite particle 1 (the time for which they are kept in a high-temperature atmosphere) in the reaction region HR and cooling capacity due to a decrease in rate of the reaction gas flow GR are controlled thereby to be able to adjust the size of the composite particle 1 to be formed. That is to say, according to this method, particle growth of the composite particle 1 can be properly controlled, whereby it becomes possible to easily obtain the fine particle.

In the present invention, the surface treatment with the silane coupling agent is further performed to the composite particles 1 produced as described above. As a method of the surface treatment, there is suitably utilized a wet method by which a high-accuracy treatment is possible. This wet method is a method of adding the silane coupling agent into a solvent in which the composite particles 1 are dispersed to bind the silane coupling agent to surfaces of the composite particles 1, and thereafter, removing the solvent, followed by drying. Incidentally, the surface treatment may be performed by a dry method using no solvent. Further, the surface treatment may be performed by using other surface treatment agents as described above.

Incidentally, the component constituting the covering layer 5 of the composite particle 1 is silicon dioxide, so that the use of the silane coupling agent makes it possible to improve affinity between the covering layer 5 and the surface treatment layer 7. This is therefore preferred.

<Fillers Other Than Composite Particles>

Incidentally, in the present invention, fillers other than the composite particles of the present invention can be used together within the range not deteriorating the physical properties. The fillers used include fibrous fillers and non-fibrous fillers such as plate-like, scale-like, granular and indeterminately formed fillers and crushed products. Specific examples thereof include glass fiber, PAN-based and pitch-based carbon fibers, metal fibers such as stainless steel fiber, aluminum fiber and brass fiber, organic fibers such as aromatic polyamide fiber, gypsum fiber, ceramic fiber, zirconia fiber, alumina fiber, silica fiber, titanium dioxide fiber, silicon carbide fiber, potassium titanate whisker, barium titanate whisker, barium borate whisker, silicon nitride whisker, mica, layered clay mineral, talc, kaolin, silica, calcium carbonate, glass beads, glass flakes, glass microballoons, clay, molybdenum disulfide, wollastonite, titanium dioxide, zinc oxide, calcium polyphosphate, graphite, metal powder, metal flakes, metal ribbon, metal oxides, carbon powder, black lead, carbon flakes, scale-like carbon and the like. The above-mentioned fillers can also be used together as a combination of two or more thereof.

Incidentally, these fillers can also be used after treating surfaces thereof with a known surface treatment agent such as, for example, a coupling agent or a surfactant.

Further, in the flame-retardant resin composition of the present invention, there may be contained single fine particles of a single metal oxide such as fine titanium dioxide particles or fine silicon dioxide particles.

<Other Additives>

Furthermore, in the resin composition and fiber of the present invention, there may be used together various other additives, for example, antidegradants such as antioxidants, ultraviolet absorbers and light stabilizers, lubricants, antistatic agents, release agents, plasticizers, coloring agents such as pigments, and the like. The amount of the above-mentioned additive used can be appropriately selected depending on the kind of additive, within the range not deteriorating the original physical properties of the resin and fiber.

[Flame-Retardant Resin Composition]

In the flame-retardant resin composition of the present invention, the amount of the above-mentioned composite particles of the present invention blended into the resin is 1% by weight or more, and preferably from 1 to 98% by weight, based on the resin which is the aromatic polyamide. In the case of less than 1% by weight, no predetermined flame retardancyimproving effect is exerted. On the other hand, even when the amount exceeds 98% by weight, forming of the resin becomes difficult, resulting in poor formability of a resin formed product. This is therefore unfavorable.

Incidentally, when the amount of the composite particles blended into the resin is 40% by weight or more, flame retardancy can be greatly improved, although the mechanical strength of the resin is sacrificed to some extent.

The resin composition of the present invention preferably has a limiting oxygen index measured in accordance with JIS L1091 of 30 or more. Less than 30 unfavorably results in the disappearance of the characteristics as the flameretardant resin. The limiting oxygen index (LOI) as used herein is the index showing the ratio of oxygen necessary for the material to keep burning, and the larger numerical value indicates higher flame retardancy.

This limiting oxygen index can be achieved by incorporating the composite particles used in the present invention into the resin in an amount of 1% by weight or more.

Further, the dispersed particle average corresponding size of the composite particles in the resin composition of the present invention is preferably from 10 to 200 nm, and more preferably from 10 to 100 nm.

In order to obtain the dispersed particle average corresponding size within the above-mentioned range, the average particle size of the composite particles used in the present invention is adjusted within the above-mentioned range (10 to 500 nm), and the composite particles are further finely pulverized or dispersed with a bead mill or the like and incorporated into the resin, thereby performing adjustment.

Incidentally, the dispersed particle average corresponding size as used herein is the value (Y) obtained by the following equation, when the composition is cut and the average particle dispersion area per observed cross-sectional area of 25 $\mu m^2$ in observing the cross section at a magnification of X100,000 under an electron microscope is taken as S ($\mu m^2$).

$$Y \ (nm) = 2 \times \sqrt{(S/\pi)}$$

For example, taking the aromatic polyamide for example as the resin, the resin composition of the present invention is prepared in the following manner. That is to say, an aromatic polyamide solution (which may be a produced polymer dope at the time of the production of the aromatic polyamide) and a composite particle dispersion are mixed, and the resulting mixed solution is formed into a desired shape, followed by removal of the solvent, thereby obtaining the formed product.

Here, the mixed solution of the aromatic polyamide and the composite particles is obtained as a homogeneous mixed solution. As the solvents used in the aromatic polyamide solution and the composite particle dispersion herein, the above-mentioned solvents for the aromatic polyamide can be used. These solvents can be used either alone or as a combination of two or more thereof.

In terms of forming, it is preferred that the solvents used for the aromatic polyamide solution and the composite particle dispersion are the same as each other.

The solid concentration (the total concentration of the aromatic polyamide and the composite particles) after mixing is usually from 1 to 20% by weight, and preferably from about 3 to 15% by weight.

Using the mixed solution thus obtained, forming into fiber, film and other formed articles is performed by a wet method or a dry method, and the solvent is removed, thereby being able to produce the formed article composed of the resin composition of the present invention. Further, the physical properties of the resulting formed article can be further improved by performing an after treatment on the resulting formed article.

[Flame-Retardant Fiber]

The amount of the composite particles of the present invention blended into the fiber is from 1 to 30% by weight, based on the aromatic polyamide fiber. Flame retardancy can be imparted to the fiber by such a small amount blended.

In the case of less than 1% by weight, no predetermined flame retardancy-improving effect is exerted. On the other hand, exceeding 30% by weight results in poor formability of the fiber. This is therefore unfavorable.

Incidentally, the amount of the composite particles blended into the fiber can also be from 30 to 50% by weight. In this case, flame retardancy can be greatly improved, although the mechanical strength of the fiber is sacrificed to some extent.

The fiber of the present invention preferably has a limiting oxygen index measured in accordance with JIS L1091 of 30 or more. Less than 30 unfavorably results in the disappearance of the characteristics as the flame-retardant fiber.

The limiting oxygen index (LOI) as used herein is the index showing the ratio of oxygen necessary for the material to keep burning, and the larger numerical value indicates higher flame retardancy.

This limiting oxygen index can be achieved by incorporating the composite particles used in the present invention into the fiber in an amount of 1% by weight or more.

Further, the dispersed particle average corresponding size of the composite particles in the fiber of the present invention is preferably from 10 to 200 nm, and more preferably from 10 to 100 nm.

In order to obtain the dispersed particle average corresponding size within the above-mentioned range (10 to 200 nm), the average particle size of the composite particles used in the present invention is adjusted within the above-mentioned range (10 to 500 nm), and the composite particles are further finely pulverized or dispersed with a bead mill or the like and incorporated into the polymer, thereby performing adjustment.

Incidentally, the dispersed particle average corresponding size as used herein is the value (Y) obtained by the following equation, when the fiber is cut perpendicularly to the fiber length and the average particle dispersion area per observed cross-sectional area of 25 $\mu m^2$ in observing the cross section at a magnification of X100,000 under an electron microscope is taken as S ($\mu m^2$).

$$Y \ (nm)=2\times\sqrt{(S/\pi)}$$

For example, the fiber of the present invention is prepared in the following manner. That is to say, an aromatic polyamide solution (which may be a produced polymer dope at the time of the production of the aromatic polyamide) and a composite particle dispersion are mixed, and the resulting mixed solution is subjected to wet spinning or dry spinning, followed by removal of the solvent, thereby obtaining the fiber.
Here, the mixed solution of the aromatic polyamide and the composite particles is obtained as a homogeneous mixed solution. As the solvents used in the aromatic polyamide solution and the composite particle dispersion herein, the above-mentioned solvents for the aromatic polyamide can be used. These solvents can be used either alone or as a combination of two or more thereof.
In terms of spinning, it is preferred that the solvents used for the aromatic polyamide solution and the composite particle dispersion are the same as each other.
The solid concentration (the total concentration of the aromatic polyamide and the composite particles) after mixing is usually from 1 to 20% by weight, and preferably from about 3 to 15% by weight.

Using the mixed solution thus obtained, which is a polymer composition, forming into fiber is performed by a wet method or a dry method, and the solvent is removed, thereby being able to produce the flame-retardant fiber of the present invention. Further, the physical properties of the resulting fiber can be further improved by performing an after treatment such as drawing or a heat treatment on the resulting fiber.

Furthermore, a specific example of the production method of the flame-retardant fiber will be shown below.
That is to say, in order to produce the above-mentioned aromatic polyamide fiber containing the composite particles of the present invention, the above-mentioned aromatic polyamide is dissolved in an organic solvent to prepare an isotropic dope, and the composite particles dispersed in the same organic solvent at a high concentration are added thereto, followed by wet spinning. Here, the dope may be either an intact organic solvent dope after solution polymerization has been performed or one in which the aromatic polyamide separately obtained is dissolved in an organic solvent, as long as the aromatic polyamide is dissolved. In particular, an intact one after a solution polymerization reaction has been performed is preferred.

In this case, when the composite particles are mixed in the aromatic polyamide at a high concentration, it is necessary to inhibit aggregation of the composite particles. When the aromatic polyamide fiber dope is prepared, a method thereof is not particularly limited. However, a method of injecting the composite particle dispersion at a constant pressure and performing dynamic mixing and/or static mixing is preferred. However, there is a problem that the composite particles are liable to aggregate in the composite particle dispersion. In order to inhibit the above-mentioned aggregation of the composite particles, it is effective to add a small amount of the aromatic polyamide solution. That is to say, the aromatic polyamide solution and the composite particle dispersion containing preferably 1 to 5 parts by weight of the aromatic polyamide based on 100 parts by weight of the composite particles are mixed with each other. When the aromatic polyamide is less than 1.0 part by weight based on 100 parts by weight of the composite particles, it becomes difficult to inhibit the aggregation of the composite particles. On the other hand, when the aromatic polyamide exceeds 5.0 parts by weight based on 100 parts by weight of the composite particles, the viscosity of the composite particle dispersion increases, resulting in difficulty of handling in a process requiring pipe transportation.

Here, as the polymerization solvents or the re-dissolving solvents, generally known aprotic organic polar solvents are used. Examples thereof include N-methyl-2-pyrrolidone, N-ethyl-2-pyrrolidone, N,N-dimethylformamide, N, N-dimethylacetamide, N,N-diethylacetamide, N,N-dimethylpropionamide, N,N-dimethylbutylamide, N,N-dimethylisobutylamide, N-methylcaprolactam, N,N-dimethylmethoxyacetamide, N-acetylpyrrolidine, N-acetylpiperidine, N-methylpiperidone-2 (NMPD), N,N'-dimethylethyleneurea, N,N'-dimethylpropyleneurea, N,N,N',N'-tetramethylmaloneamide, N-acetylpyrrolidone, N,N,N',N'-tetramethylurea, dimethyl sulfoxide and the like.

The polymerization degree of the aromatic polyamide in the present invention is not particularly limited. However, the higher polymerization degree is preferred within the range not deteriorating forming processability, as long as the polyamide is soluble in the solvent. When the aromatic polyamide of the present invention is prepared by solution polymerization, a substantially equimolar reaction is performed for the ratio of an acid chloride and a diamine. However, either component can also be used in excess for polymerization degree control. Further, a monofunctional acid component or amine component may be used as a terminal capping agent.

The isotopic dope obtained as described above is subjected to wet spinning. In this case, the above-mentioned dope may be directly discharged into a coagulation bath, or an air gap may be provided. A poor solvent for the aromatic polyamide is used in the coagulation bath. However, a good solvent is usually added to control the coagulation rate so that defects due to rapid elimination of the solvent of the aromatic polyamide dope are not formed in the aromatic polyamide fiber. In general, it is preferred that water is used as the poor solvent, and that the solvent for the aromatic polyamide dope is used as the good solvent. The weight ratio of good solvent/poor solvent is generally preferably from 15/85 to 40/60, although it depends on solubility or coagulability of the aromatic polyamide.

The resulting fiber is not sufficiently oriented in this stage, so that it is preferably highly oriented and crystallized to a degree of crystalline orientation determined from wide-angle X-ray diffraction of 89% or more and a crystallinity of 74% or more by hot drawing. When either or both of the degree of crystalline orientation and the crystallinity is lower than this, mechanical properties of the resulting fiber is liable to become insufficient, even though a heat (drawing) treatment is performed. The temperature of hot drawing is preferably from 300°C to 550°C, although it depends on the polymer skeleton of the aromatic polyamide, and the draw ratio is preferably 10 or more.

Incidentally, the monofilament fineness of the resulting flame-retardant fiber is from 0.5 to 50 dtex. In the case of less than 0.5 dtex, the composite particles added act as fiber defects to cause unstable fiber-forming properties in some cases. Further, the specific surface area of the fiber increases, so that the fiber is liable to suffer from light deterioration. On the other hand, in the case of exceeding 50 dtex, the specific surface area of the fiber decreases, so that the fiber is difficult to suffer from light deterioration. While the specific surface area is small in a fiber-forming process, so that coagulation is liable to become incomplete. As a result, the production stability tends to be disordered in a spinning or drawing process, and the physical properties are also apt to deteriorate.

It is preferred that the strength is as high as possible. However, the strength has a tendency to decrease as the concentration of the composite particles is increased, and less than 10 cN/dtex results in deficiency in a feature as a high-strength fiber. More preferably, the strength is 15 cN/dtex or more.

Further, the elongation is 3.0% or more. In the case of less than 3.0%, when used as a twisted cord, twist strain increases to decrease the strength utilization of the twisted cord. Accordingly, in the case of a rope or net used outdoors, which is particularly required to have light resistance, a problem is encountered with regard to high strength durability. The elongation is preferably from 3.5 to 5.0%.

In the flame-retardant fiber of the present invention, the ratio ($T/T_0$) of the tensile strength (T) of the fiber to the tensile strength ($T_0$) of a comparative fiber composed of the same fiber as the above-mentioned fiber except that it contains no composite particles is 0.7 or more, and preferably 0.8 or more. When the above-mentioned ratio is less than 0.7, high strength properties are lost. In order to make this ratio 0.7 or more, the dispersed particle average corresponding size of the composite particles dispersed in the fiber is required to be 200 nm or less.

The flame-retardant aromatic polyamide fiber of the present invention thus obtained, constitutes a fiber structure such as a braid, a rope, a twisted cord, a yarn or a staple fiber, as well as a cloth such as a woven fabric, a knitted fabric or a nonwoven fabric.

[Heat-Resistant Cloth]

The heat-resistant cloth of the present invention is formed as a knitted fabric or a woven fabric using the above-mentioned flame-retardant fiber of the present invention. However, a woven fabric is preferably used for heat-resistant protective clothing such as a fireman uniform because an appropriate strength is required. In the case of the woven fabric, it is practical to use one whose basis weight is within the range of 150 to 350 $g/m^2$. When the above-mentioned basis weight is less than 150 $g/m^2$, there is a fear of failing to obtain sufficient heat-resistant performance. On the other hand, when the basis weight exceeds 350 $g/m^2$, wear feeling at the time when used as the protective clothing is unfavorably disturbed.

Further, other flame-retardant fibers or ordinary fibers which are no flame-retardant fibers may be used together with the heat-resistant cloth of the present invention as needed. As the other flame-retardant fibers, there are preferably used cellulosic fibers represented by flame-retardant rayon and flame-retardant cotton, polyesters to which a flame retardant is added, or the like. Further, as the ordinary fibers, preferred are cotton, polyester fibers, aliphatic polyamide fibers, acrylic fibers, vinyl chloride fibers and the like. As flame-retardant materials, preferred are flame-retardant materials such as flame-retardant rayon, flame proof-finished cotton, flame-retardant wool, flame-retardant polyester fibers, flame-retardant vinylon fibers, flame-retardant acrylic fibers and novolac fibers. Above all, when a cellulosic fiber such as flame-retardant rayon or flame proof-finished cotton or flame-retardant wool is mixed, higher hygroscopicity is obtained than that of the aromatic polyamide fiber alone. This is therefore more preferred in terms of comfort. Further, in the case of attaching weight to quick-drying properties, flame-retardant vinylon fibers, flame-retardant acrylic fibers, flame-retardant polyester fibers and the like are desirable.

For the mixing ratio of the flame-retardant fiber of the present invention and the other flame-retardant fiber, it is suitable that the former is from 100 to 50% by weight, and that the latter is from 0 to 50% by weight. When the other flame-retardant fiber exceeds 50% by weight, heat resistance and flame resistance originally intended are unfavorably deteriorated.

Incidentally, when cotton, rayon or polyester is used as the other flame-retardant fiber in the cloth of the present invention, the limiting oxygen index (LOI) becomes less than 28 in some cases depending on the amount thereof used together. In that case, however, a flame retardant such as a tetrakis(hydroxyalkyl)phosphonium-based compound known as a flameproofing agent for cotton is used in an amount required to treat the cloth, thereby being able to obtain the cloth having a LOI of 28 or more. Further, it is possible to more improve flame retardancy of the cloth to obtain the cloth having a LOI of 30 or more by treating the cloth with an increased amount of the flame retardant such as the tetrakis-(hydroxyalkyl)phosphonium-based compound.

In the heat-resistant cloth of the present invention thus obtained, the strength retention after 100 hours under a circumstance of a temperature of 80°C and a humidity of 95% is preferably 90% or more, and more preferably from 95 to 100%. When the strength retention is less than 90%, it is conceivable that the physical properties of the fiber are extremely deteriorated, for example, in an operation under high temperature and high humidity.

Further, in the heat-resistant cloth of the present invention, when the tensile strength of such a heat-resistant cloth is taken as (T) and the tensile strength of a comparative cloth composed of the same fiber as the fiber constituting the cloth of the present invention except that it contains no composite particles is taken as (To), the ratio $(T/T_0)$ is preferably 0.7 or more, and more preferably from 0.8 to 1.0. When the ratio is less than 0.7, mechanical strength necessary for the protective clothing can not be satisfied.

[Heat-Resistant Protective Clothing]

The heat-resistant cloth of the present invention can be sewed as it is, as a heat-resistant protective clothing. However, in order to improve the heat-resistant performance of the cloth, a water repellent finish can be previously performed to a front fabric surface (a surface side of the heat-resistant protective clothing) to prepare the cloth having high water repellency. The above-mentioned water repellent finish can be performed by using a fluorine-based water-repellent resin according to a known method, by a processing method such as a coating method, a spray method or a dipping method. In the protective clothing prepared by using the heat-resistant cloth to which the water repellent finish has thus been performed, water can be prevented from entering void portions at the time of a fire-extinguishing operation, so that the wear performance of the protective clothing can be improved.

Then, the heat-resistant cloth of the present invention is used in at least one layer of a front fabric layer, an intermediate layer and a back fabric layer (heat shielding layer) of the protective clothing having a composite structure comprising the front fabric layer, the intermediate layer and the back fabric layer (heat shielding layer), in at least one layer of a front fabric layer and a back fabric layer of the protective clothing having a composite structure comprising the front fabric layer and the back fabric layer, or in a front fabric layer in the case of the protective clothing made of only the front fabric layer.

That is to say, the heat-resistant cloth of the present invention can constitutes the protective clothing or an armor by using one sheet of itself, laminating two or more sheets thereof or laminating it on another sheet-like material.

For example, the above-mentioned heat-resistant clothing has a structure in which three layers of the front fabric layer which are composed of the above-mentioned heat-resistant cloth of the present invention, the intermediate layer and the back fabric layer (heat shielding layer) are laminated in this order, and all these layers are constituted by the cloth of the heat-resistant fiber mainly composed of the aromatic polyamide fiber. The heat-resistant protective clothing of the present invention is preferably the protective clothing having the composite structure comprising the front fabric layer, the intermediate layer and the back fabric layer (heat shielding layer), and particularly preferred is one in which the front fabric layer, the intermediate layer and the back fabric layer satisfy the following requirements (a) to (c) at the same time.

(a) The front fabric layer is constituted by the heat-resistant fabric composed of the flame-retardant fiber of the present invention;
(b) The intermediate layer has moisture permeability and waterproof properties; and
(c) The heat shielding layer is constituted by a nonwoven fabric or woven or knitted fabric composed of the aromatic polyamide fiber.

The front fabric layer (a) used herein includes the heat-resistant cloth (front fabric) composed of the flame-retardant fiber of the present invention as described above. The basis weight of the heat-resistant cloth used as the front fabric layer (a) is usually from 150 to 300 $g/m^2$.

Further, it is important that the intermediate layer (b) has moisture permeability and waterproof properties, and one in which a thin film having moisture permeability and waterproof properties is laminated on the cloth composed of the aromatic polyamide fiber is preferably used.

As the cloth on which the above-mentioned thin film layer is laminated, a woven fabric, a knitted fabric or a nonwoven material can be used. However, a woven fabric is used in terms of strength, and one in which the thin film having moisture permeability and waterproof properties is laminated on the woven fabric is optimally exemplified. The basis weight of the cloth used as the intermediate layer (b) is usually from 50 to 150 $g/m^2$.

Further, as the thin film constituting the intermediate layer, a known film can be used as long as it has moisture permeability and waterproof properties. However, there is particularly preferably exemplified one in which a thin film composed of polytetrafluoroethylene also having chemical resistance is used. Insertion of such an intermediate improves moisture permeability, waterproof properties and chemical resistance, and enhances transpiration of the sweat of a wearer. Accordingly, heat stress of the wearer can be decreased. The thickness of the above-mentioned thin film is usually from 10 to 50 $\mu$m, and the basis weight thereof is usually from 20 to 50 g/m$^2$. The total basis weight of the intermediate layer (b) described above is usually from 70 to 200 g/m$^2$.

Furthermore, as the heat shielding layer (c) of the three-layer structure, it is effective to use a cloth having high bulkiness, and a layer containing a large amount of air having low thermal conductivity can be formed by such a cloth. It is preferred that a nonwoven fabric or a woven fabric having a bulky structure, which is composed of the aromatic polyamide fiber having high heat resistance, is used as such a cloth. As the basis weight of the above-mentioned cloth, the range of 20 to 200 g/m$^2$ is preferably exemplified. When the basis weight of the cloth is less than 20 g/m$^2$, the strength of the cloth is low, which causes a fear of becoming unsustainable in practical use. On the other hand, a basis weight exceeding 200 g/m$^2$ increases the weight of the protective clothing, resulting in inhibition of movement of a wearer.

Incidentally, in one in which the heat shielding layer is formed by using only the above-mentioned nonwoven fabric, problems of a kink at the time of wearing, losing in shape and the like are encountered. It is therefore necessary to use as a composite material with a woven fabric of the aromatic polyamide fiber. The composite material obtained by laminating the nonwoven fabric composed of the above-mentioned aromatic polyamide fiber or a laminate thereof and the woven fabric composed of the above-mentioned aromatic polyamide fiber, and performing quilting processing thereto to bind them is optimally used. The heat shielding layer having excellent wearing stability, in which the kink at the time of wearing, losing in shape and the like do not occur, can be formed by laminating the fabric as described above and arranging a surface on which the fabric is present, on the inside (on the skin side).

The total basis weight of the heat-resistant protective clothing of the present invention having the above-mentioned three-layer structure is usually from 250 to 750 g/m$^2$.

Incidentally, the heat-resistant protective clothing of the present invention has such a composite structure comprising the front fabric layer, the intermediate layer and the heat shielding layer (back fabric layer). The respective layers are unnecessary to be mutually bonded, and may be laminated and sewed together. Further, it is preferred that the clothing has such a structure that the intermediate layer and the heat shielding layer may each be attached removably from the front fabric layer to be easily washable.

The above-mentioned heat-resistant protective clothing of the present invention comprises at least the heat-resistant cloth used as the front fabric layer, and in irradiation of radiant heat at 10 kW/m$^2$ according to ISO 6942, the ratio ($S/S_0$) of the time (S) reaching a second-degree burn of the heat-resistant cloth containing the composite particles to the time ($S_0$) reaching a second-degree burn of the heat-resistant cloth containing no composite particles is preferably 1.04 or more, and more preferably from 1.05 to 2.00. When this ratio is less than 1. 04, the heat shielding effect is not sufficiently obtained.

Examples

The present invention will be specifically described below in more detail with reference to Examples and Comparative Examples. However, Examples and Comparative Examples are only for helping of understanding of the content of the present invention and the scope of the present invention is not limited by these descriptions.

Incidentally, respective characteristic values in Examples were measured by the following methods.

<Average Particle Size of Composite Particles>

The average particle size was determined as the NMP dispersion size in a state where the composite particles were dispersed in 5% by weight N-methyl-2-pyrrolidon (NMP). The NMP dispersion size was determined by a dynamic light scattering method using a concentrated particle size analyzer "FPIR-1000" (manufactured by Otsuka Denshi Co., Ltd.).

<Dispersibility (Dispersed Particle Average Corresponding Size of Composite Particles in Film)>

When the composition was cut and the average particle dispersion area per observed cross-sectional area of 25 $\mu$m$^2$ in observing the cross section at a magnification of X100,000 under an electron microscope was taken as S ($\mu$m$^2$), (Y) calculated by the following equation was taken as the dispersion average corresponding size.

$$Y \ (nm) = 2 \times \sqrt{(S/\pi)}$$

<Limiting Oxygen Index (Resin Composition)>

Measurement of the limiting oxygen index was performed by a measurement method in accordance with JIS L1091.

<Dispersibility (Dispersed Particle Average Corresponding Size of Composite Particles in Fiber)>

When the fiber was cut and the average particle dispersion area per observed cross-sectional area of 25 $\mu m^2$ in observing the cross section at a magnification of X100, 000 under an electron microscope was taken as S ($\mu m^2$), (Y) calculated by the following equation was taken as the dispersion average corresponding size.

$$Y \ (nm) = 2 \times \sqrt{(S/\pi)}$$

<Fineness>

The fineness was measured in accordance with JIS-L-1013.

<Strength and Elongation of Fiber>

Measurement was made using a tensile testing machine (manufactured by Olientech Co., Ltd., trade name: Tensiron universal testing machine, type: RTC-1210A) based on ASTM D885 under conditions of a measurement sample length of 500 mm, a chuck tensile rate of 250 mm/min and a preliminary tension of 0.2 cN/dtex.

$T/T_0$ was determined as the ratio of the tensile strength (T) of the fiber to the tensile strength ($T_0$) of a comparative fiber composed of the same fiber as the above-mentioned fiber except that it contains no composite particles.

<Limiting Oxygen Index [Fiber (Woven Fabric)]>

Measurement of the limiting oxygen index was made by a measurement method in accordance with JIS L 1091.

(Measurement Conditions)

Classification of Test Piece: E-2
Preparation Method of Cloth: Circular knitted fabric (23 wales/2.54 cm (23 wales/inch), 18 courses/2.54 cm (18 courses/inch))
Kind of Heat Source of Igniter: JIS K 2240, class 1, No. 1 (LP gas)

Incidentally, the limiting oxygen index was decided by an earlier one of the following (a) and (b).

(a) Burning length in deciding the limiting oxygen index: 50 mm
(b) Burning time in deciding the limiting oxygen index: 180 sec

<Strength Retention>

Measurement was made by a measurement method in accordance with JIS L 1091, tensile strength method A. Taking the tensile strength of the heat-resistant cloth containing the composite particles as (T) and the tensile strength of the cloth containing no composite particles as ($T_0$), the strength retention was determined as follows:

$$\text{Strength retention} = T/T_0$$

<Hygrothermal Strength Retention>

A treatment was performed in a thermo-hygrostat (Nagano Science Co., Ltd.) of a temperature of 80°C and a humidity of 95% for 100 hours, and measurement was made by a measurement method in accordance with JIS L 1091, tensile strength method A. Taking the tensile strength of the heat-resistant cloth containing the composite particles as (D) and the tensile strength of the cloth containing no composite particles as ($D_0$), the strength retention was determined as follows:

$$\text{Hygrothermal strength retention} = (D/D_0) \times 100$$

<Radiant Heat Resistance>

In accordance with ISO 6942, a sample was set so as to achieve a heat flux of 10 kW/m$^2$, and the time reaching a second-degree burn was measured. Taking the time reaching the second-degree burn of the heat-resistant cloth containing the composite particles as (S) and the time reaching the second-degree burn of the heat-resistant cloth containing no composite particles as ($S_0$), ($S/S_0$) was taken as an index of the radiant heat resistance effect.

Example 1

A tetra (2-ethylhexyl) titanate solution was prepared as a raw material liquid containing titanium, and an octamethylcyclotetrasiloxane solution was prepared as a raw material liquid containing silicon. These were mixed to a titanium dioxide content of 10% by weight and a silicon dioxide content of 90% by weight, respectively, after formation of composite particles. Using this mixed raw material liquid, the composite particles were produced by setting the plasma input power of NanoCreator described above to 7 kW, and the collector temperature to 120°C. Incidentally, the average particle size of the composite particles was 137 nm.
Then, 10 g of the composite particles was dispersed in 500 g of pure water, followed by stirring for 1 hour, and thereafter, 4 g of phenylethoxysilane was added, followed by further dispersing and stirring for 24 hours. Next, a precipitate after filtration was dried at 110°C for 24 hours, and an aggregate after drying was cracked to obtain composite particles having surface treatment layers on outer surfaces thereof.
The composite particles thus obtained were dispersed in N-methyl-2-pyrrolidone (NMP) to 5% by weight, by using a bead mill (manufactured by Asada Iron Works Co., Ltd., Nano Grain Mill). In this case, 0.3-mm zirconia beads were used as a medium. This dispersion was added to an NMP solution of copolyparaphenylene-3,4'-oxydiphenyleneterephthalamide (having an intrinsic viscosity (IV) of 3.4, which was measured for a solution having a polymer concentration of 0.5 g/dl in 98% concentrated sulfuric acid at 30°C) having a concentration of 6% by weight, followed by stirring and mixing at 60°C for 2 hours. At this time, the amount of the composite particles blended into copolyparaphenylene-3,4'-oxydiphenyleneterephthalamide was adjusted to 10% by weight. The resin composition to which the composite particles were added was formed by using a doctor blade, washed with room-temperature water for 30 minutes, and then, dried at 200°C for 2 hours to obtain a film having a thickness of about 30 $\mu$m.
The limiting oxygen index (LOI) of the film thus obtained was measured. The results thereof are shown in Table 1.

Example 2

A film of copolyparaphenylene-3,4'-oxydiphenyleneterephthalamide to which the composite particles were added was obtained under the same conditions as in Example 1 with the exception that a raw material liquid was prepared to a titanium dioxide content of 15% by weight and a silicon dioxide content of 85% by weight, respectively, after formation of composite particles. The same evaluation as in Example 1 was made for the resulting film. The results thereof are shown in Table 1. Incidentally, the average particle size of the composite particles was 132 nm.

Example 3

A film of copolyparaphenylene-3,4'-oxydiphenyleneterephthalamide to which the composite particles were added was obtained under the same conditions as in Example 1 with the exception that a raw material liquid was prepared to a titanium dioxide content of 20% by weight and a silicon dioxide content of 80% by weight, respectively, after formation of composite particles. The same evaluation as in Example 1 was made for the resulting film. The results thereof are shown in Table 1. Incidentally, the average particle size of the composite particles was 112 nm.

Example 4

A film of copolyparaphenylene-3,4'-oxydiphenyleneterephthalamide to which the composite particles were added was obtained under the same conditions as in Example 1 with the exception that a raw material liquid was prepared to a titanium dioxide content of 25% by weight and a silicon dioxide content of 75% by weight, respectively, after formation of composite particles. The same evaluation as in Example 1 was made for the resulting film. The results thereof are shown in Table 1. Incidentally, the average particle size of the composite particles was 140 nm.

Example 5

A film of copolyparaphenylene-3,4'-oxydiphenyleneterephthalamide to which the composite particles were added was obtained under the same conditions as in Example 1 with the exception that a raw material liquid was prepared to a titanium dioxide content of 30% by weight and a silicon dioxide content of 70% by weight, respectively, after formation of composite particles. The same evaluation as in Example 1 was made for the resulting film. The results thereof are shown in Table 1. Incidentally, the average particle size of the composite particles was 133 nm.

Example 6

A film of copolyparaphenylene-3,4'-oxydiphenyleneterephthalamide to which the composite particles were added was obtained under the same conditions as in Example 3 with the exception that the ratio to the film of copolyparaphenylene-3,4'-oxydiphenyleneterephthalamide was changed to 1% by weight. The same evaluation as in Example 1 was made for the resulting film. The results thereof are shown in Table 1.

Example 7

A film of copolyparaphenylene-3,4'-oxydiphenyleneterephthalamide to which the composite particles were added was obtained under the same conditions as in Example 3 with the exception that the ratio to the film of copolyparaphenylene-3,4'-oxydiphenyleneterephthalamide was changed to 40% by weight. The same evaluation as in Example 1 was made for the resulting film. The results thereof are shown in Table 1.

Comparative Example 1

A film of copolyparaphenylene-3,4'-oxydiphenyleneterephthalamide to which the composite particles were added was obtained under the same conditions as in Example 1 with the exception that a raw material liquid was prepared to a titanium dioxide content of 40% by weight and a silicon dioxide content of 60% by weight, respectively, after formation of composite particles. The same evaluation as in Example 1 was made for the resulting film. The results thereof are shown in Table 1. Incidentally, the average particle size of the composite particles was 143 nm.

Comparative Example 2

A film of copolyparaphenylene-3,4'-oxydiphenyleneterephthalamide to which the composite particles were added was obtained under the same conditions as in Example 1 with the exception that a raw material liquid was prepared to a titanium dioxide content of 60% by weight and a silicon dioxide content of 40% by weight, respectively, after formation of composite particles. The same evaluation as in Example 1 was made for the resulting film. The results thereof are shown in Table 1. Incidentally, the average particle size of the composite particles was 150 nm.

Comparative Example 3

A film composed of only copolyparaphenylene-3,4'-oxydiphenyleneterephthalamide was obtained in the same manner as in Example 1 with the exception that no composite particles were added. The same evaluation as in Example 1 was made for the resulting film. The results thereof are shown in Table 1.

Comparative Example 4

A film of copolyparaphenylene-3,4'-oxydiphenyleneterephthalamide was obtained in the same manner as in Example 3 with the exception that the amount of the composite particles blended into copolyparaphenylene-3,4'-oxydiphenyleneterephthalamide was changed to 0.5% by weight. The same evaluation as in Example 1 was made for the resulting film. The results thereof are shown in Table 1.

Comparative Example 5

Using a raw material liquid composed of only the tetra(2-ethylhexyl) titanate solution, fine particles of titanium dioxide were obtained in the same manner as in Example 1, and a film of copolyparaphenylene-3,4'-oxydiphenyleneterephthalamide to which only the fine titanium dioxide particles were added was obtained in the same manner as in Example 1. The same evaluation as in Example 1 was made for the resulting film. The results thereof are shown in Table 1. Incidentally, the average particle size of the composite particles was 106 nm.

Comparative Example 6

Using a raw material liquid composed of only the octamethylcyclotetrasiloxane solution, fine particles of silicon dioxide were obtained in the same manner as in Example 1, and a film of copolyparaphenylene-3,4'-oxydiphenyleneterephthalamide to which only the fine silicon dioxide particles were added was obtained in the same manner as in Example 1. The same evaluation as in Example 1 was made for the resulting film. The results thereof are shown in Table 1. Incidentally, the average particle size of the composite particles was 111 nm.

Comparative Example 7

Using fine particles of magnesium hydroxide (MG-23D manufactured by Kyoritsu Material Co., Ltd.), a film of copolyparaphenylene-3,4'-oxydiphenyleneterephthalamide to which only the fine magnesium hydroxide particles were added was obtained in the same manner as in Example 1. The same evaluation as in Example 1 was made for the resulting film. The results thereof are shown in Table 1.

Comparative Example 8

Using fine particles of calcium carbonate (CS·3N-A manufactured by Ube Material Industries, Ltd.), a film of copolyparaphenylene-3,4'-oxydiphenyleneterephthalamide to which only the fine calcium carbonate particles were added was obtained in the same manner as in Example 1. The same evaluation as in Example 1 was made for the resulting film. The results thereof are shown in Table 1.

Comparative Example 9

Using the fine titanium dioxide particles obtained in Comparative Example 5 and the fine silicon dioxide particles obtained in Comparative Example 6 as merely mixed particles, not in a configuration of composite particles, a film of copolyparaphenylene-3,4'-oxydiphenyleneterephthalamide to which the mixed particles of the fine titanium dioxide particles and the fine silicon dioxide particles were added was obtained in the same manner as in Example 1. Incidentally, the ratios of titanium dioxide and silicon dioxide were 20% by weight and 80% by weight, respectively. The same evaluation as in Example 1 was made for the resulting film. The results thereof are shown in Table 1.

[Table 1]

| | Kind of Particle | $TiO_2$ (wt%) | $SiO_2$ (wt%) | Configuration | Amount Blended (wt%) | Film Thickness ($\mu$m) | Dispersibility (nm) | Limiting Oxygen Index (LOI) |
|---|---|---|---|---|---|---|---|---|
| Example 1 | Composite Particle | 10 | 90 | Film | 10 | 30 | 111 | 34.2 |
| Example 2 | Composite Particle | 15 | 85 | Film | 10 | 32 | 98 | 35.1 |
| Example 3 | Composite Particle | 20 | 80 | Film | 10 | 32 | 105 | 36.0 |
| Example 4 | Composite Particle | 25 | 75 | Film | 10 | 31 | 128 | 36.8 |
| Example 5 | Composite Particle | 30 | 70 | Film | 10 | 30 | 102 | 35.1 |
| Example 6 | Composite Particle | 20 | 80 | Film | 1 | 29 | 95 | 31.1 |

(continued)

| | Kind of Particle | TiO$_2$ (wt%) | SiO$_2$ (wt%) | Configuration | Amount Blended (wt%) | Film Thickness ($\mu$m) | Dispersibility (nm) | Limiting Oxygen Index (LOI) |
|---|---|---|---|---|---|---|---|---|
| Example 7 | Composite Particle | 20 | 80 | Film | 40 | 31 | 140 | 42.1 |
| Comparative Example 1 | Composite Particle | 40 | 60 | Film | 10 | 31 | 105 | 29.8 |
| Comparative Example 2 | Composite Particle | 60 | 40 | Film | 10 | 28 | 114 | 29.8 |
| Comparative Example 3 | Not added | - | - | Film | 0 | 30 | - | 26.1 |
| Comparative Example 4 | Composite Particle | 20 | 80 | Film | 0.5 | 30 | 92 | 29.1 |
| Comparative Example 5 | TiO$_2$ | 100 | - | Film | 10 | 30 | 95 | 27.2 |
| Comparative Example 6 | SiO$_2$ | - | 100 | Film | 10 | 29 | 101 | 28.1 |
| Comparative Example 7 | Mg(OH)$_2$ | - | - | Film | 10 | 32 | 525 | 29.4 |
| Comparative Example 8 | CaCO$_3$ | - | - | Film | 10 | 30 | 320 | 28.5 |
| Comparative Example 9 | Mixed Particle | 20 | 80 | Film | 10 | 30 | 112 | 29.0 |

According to Table 1, the film of Comparative Example 3 containing no additive (the film of 100% copolyparaphenylene-3,4'-oxydiphenyleneterephthalamide) had a limiting oxygen index (LOI) of 26.1, whereas the films of Examples 1 to 5 had a limiting oxygen index (LOI) of 34.2 to 36.8, and were largely improved in the limiting oxygen index (LOI) compared to the film of Comparative Example 3. Specifically, the rate of increase thereof was 30% or more.
At this time, the amount of the composite particles blended into copolyparaphenylene-3,4'-oxydiphenyleneterephthalamide as the resin is as considerably small as 10% by weight compared to the amount of a flame retardant blended, which has been conventionally used. Incidentally, in the film of Comparative Example 7 or 8 to which magnesium hydroxide or calcium carbonate was added, a little increase in the limiting oxygen index (LOI) was observed when compared to the film of Comparative Example 3. However, the rate of increase thereof was only about 10%. When the amount blended into the resin is 10% by weight, the effect can not be sufficiently exerted.
From the above, in the resin composition of the present invention, it has been confirmed that high flame retardancy can be imparted, even when the amount of the composite particles of the present invention blended into the resin is small.
Further, in the film of Comparative Example 5 or 6 to which titanium dioxide or silicon dioxide was separately added, and in the film of Comparative Example 9 in which the fine titanium dioxide particles and the fine silicon dioxide particles were merely mixed, an increase in the limiting oxygen index (LOI) was also observed when compared to the film of Comparative Example 3. However, the rate of increase thereof was only about 10%. This shows that the use of the composite particles mainly composed of titanium dioxide and silicon dioxide causes titanium dioxide and silicon dioxide to exert a synergistic effect in a form of some kind to further impart flame retardancy to the resin, although a detailed mechanism is not clear.
Further, as known from the limiting oxygen index (LOI) of the films of Examples 1 to 5 and Comparative Examples 1 and 2, the ratio of the contents of titanium dioxide and silicon dioxide in the composite particles can be within the range of 10 to 60% by weight for titanium dioxide and within the range of 90 to 40% by weight for silicon dioxide, in order to impart certain flame retardancy to the resin. However, the films of Comparative Examples 1 and 2 increase only about 14% in the limiting oxygen index (LOI), compared to the film of Comparative Example 3. In contrast to this, the films of Examples 1 to 5 largely increase 30% or more as described above. This shows that particularly excellent flame retardancy can be imparted to the resulting resin composition by adjusting the ratio of the contents of titanium dioxide and silicon dioxide in the composite particles to 10 to 30% by weight for titanium dioxide and 90 to 70% by weight for silicon dioxide.

Furthermore, the film of Example 6 in which the amount of the composite particles blended into the resin is 1% by weight also increases about 20% in the limiting oxygen index (LOI), compared to Comparative Example 3. This shows that the use of the resin composition of the present invention provides the flame-retardant resin composition which can impart high flame retardancy while substantially decreasing the amount of flame retardant blended, compared to the conventional ones.

Incidentally, as known from the limiting oxygen index (LOI) of the film of Example 7, it goes without saying that the more the amount of the composite particles blended is, the more flame retardancy is improved. However, on the other hand, there is also a problem that the more the amount of the composite particles blended is increased, the more mechanical strength of the resin decreases. The flame-retardant resin composition of the present invention can impart flame retardancy, even when the amount of the composite particles blended is small. Accordingly, comprehensively considering performance required for the resin, it is possible to determine such an amount blended that both flame retardancy and mechanical strength can be satisfied. In accordance with the intended use, therefore, the degree of freedom of design of the resulting resin composition can be increased.

Example 8

A tetra (2-ethylhexyl) titanate solution was prepared as a raw material liquid containing titanium, and an octamethylcyclotetrasiloxane solution was prepared as a raw material liquid containing silicon. These were mixed to a titanium dioxide content of 10% by weight and a silicon dioxide content of 90% by weight, respectively, after formation of composite particles. Using this mixed raw material liquid, the composite particles were produced by setting the plasma input power of NanoCreator described above to 7 kW, and the collector temperature to 120°C. Incidentally, the average particle size of the composite particles was 137 nm.

Then, 10 g of the composite particles was dispersed in 500 g of pure water, followed by stirring for 1 hour, and thereafter, 4 g of phenylethoxysilane was added, followed by further dispersing and stirring for 24 hours. Next, a precipitate after filtration was dried at 110°C for 24 hours, and an aggregate after drying was cracked to obtain composite particles having surface treatment layers on outer surfaces thereof.

The composite particles thus obtained were dispersed in N-methyl-2-pyrrolidone (NMP) to 5% by weight, by using a bead mill (manufactured by Asada Iron Works Co., Ltd., Nano Grain Mill). In this case, 0.3-mm zirconia beads were used as a medium. This dispersion was added to an NMP solution of copolyparaphenylene-3,4'-oxydiphenyleneterephthalamide (having an intrinsic viscosity (IV) of 3.4, which was measured for a solution having a polymer concentration of 0.5 g/dl in 98% concentrated sulfuric acid at 30°C) having a concentration of 6% by weight, followed by stirring and mixing at 60°C for 2 hours. At this time, the amount of the composite particles blended into copolyparaphenylene-3,4'-oxydiphenyleneterephthalamide was adjusted to 10% by weight. The resulting dope was extruded from a spinning die having 25 holes, spun into an aqueous solution having an NMP concentration of 30% by weight through an air gap of about 10 mm, and coagulated (a semi-dry semi-wet spinning type process), followed by washing with water and drying. Then, the resulting fiber was drawn to 10 times at 530°C and thereafter taken up, thereby obtaining an aromatic polyamide fiber to which the composite particles were added in a well-dispersed state.

Then, the above-mentioned fiber was spun into a spun yarn (20/2), and a woven fabric (basis weight: 150 g/m$^2$) woven in a 2/1 twill weave was prepared. A scouring treatment was performed by a known method to remove a size and a lubricant on a surface of the woven fabric. These fiber and woven fabric characteristics are shown in Tables 2 and 3.

Example 9

A fiber of copolyparaphenylene-3,4'-oxydiphenyleneterephthalamide to which the composite particles were added and a woven fabric thereof were obtained under the same conditions as in Example 8 with the exception that a raw material liquid was prepared to a titanium dioxide content of 15% by weight and a silicon dioxide content of 85% by weight, respectively, after formation of composite particles. The same evaluation as in Example 1 was made for the resulting fiber and woven fabric. The results thereof are shown in Tables 2 and 3. Incidentally, the average particle size of the composite particles was 132 nm.

Example 10

A fiber of copolyparaphenylene-3,4'-oxydiphenyleneterephthalamide to which the composite particles were added and a woven fabric thereof were obtained under the same conditions as in Example 8 with the exception that a raw material liquid was prepared to a titanium dioxide content of 20% by weight and a silicon dioxide content of 80% by weight, respectively, after formation of composite particles. The same evaluation as in Example 8 was made for the resulting fiber and woven fabric. The results thereof are shown in Tables 2 and 3. Incidentally, the average particle size of the composite particles was 112 nm.

Example 11

A fiber of copolyparaphenylene-3,4'-oxydiphenyleneterephthalamide to which the composite particles were added and a woven fabric thereof were obtained under the same conditions as in Example 8 with the exception that a raw material liquid was prepared to a titanium dioxide content of 25% by weight and a silicon dioxide content of 75% by weight, respectively, after formation of composite particles. The same evaluation as in Example 8 was made for the resulting fiber and woven fabric. The results thereof are shown in Tables 2 and 3. Incidentally, the average particle size of the composite particles was 140 nm.

Example 12

A fiber of copolyparaphenylene-3,4'-oxydiphenyleneterephthalamide to which the composite particles were added and a woven fabric thereof were obtained under the same conditions as in Example 8 with the exception that a raw material liquid was prepared to a titanium dioxide content of 30% by weight and a silicon dioxide content of 70% by weight, respectively, after formation of composite particles. The same evaluation as in Example 8 was made for the resulting fiber and woven fabric. The results thereof are shown in Tables 2 and 3. Incidentally, the average particle size of the composite particles was 133 nm.

Example 13

A fiber of copolyparaphenylene-3,4'-oxydiphenyleneterephthalamide to which the composite particles were added and a woven fabric thereof were obtained under the same conditions as in Example 10 with the exception that the ratio to the film of copolyparaphenylene-3,4'-oxydiphenyleneterephthalamide was changed to 1% by weight. The same evaluation as in Example 8 was made for the resulting fiber and woven fabric. The results thereof are shown in Tables 2 and 3.

Example 14

A fiber of copolyparaphenylene-3,4'-oxydiphenyleneterephthalamide to which the composite particles were added and a woven fabric thereof were obtained under the same conditions as in Example 10 with the exception that the ratio to the film of copolyparaphenylene-3,4'-oxydiphenyleneterephthalamide was changed to 30% by weight. The same evaluation as in Example 8 was made for the resulting fiber and woven fabric. The results thereof are shown in Tables 2 and 3.

Comparative Example 10

A fiber of copolyparaphenylene-3,4'-oxydiphenyleneterephthalamide to which the composite particles were added and a woven fabric thereof were obtained under the same conditions as in Example 8 with the exception that a raw material liquid was prepared to a titanium dioxide content of 40% by weight and a silicon dioxide content of 60% by weight, respectively, after formation of composite particles. The same evaluation as in Example 8 was made for the resulting fiber and woven fabric. The results thereof are shown in Tables 2 and 3. Incidentally, the average particle size of the composite particles was 143 nm.

Comparative Example 11

A fiber of copolyparaphenylene-3,4'-oxydiphenyleneterephthalamide to which the composite particles were added and a woven fabric thereof were obtained under the same conditions as in Example 8 with the exception that a raw material liquid was prepared to a titanium dioxide content of 60% by weight and a silicon dioxide content of 40% by weight, respectively, after formation of composite particles. The same evaluation as in Example 8 was made for the resulting fiber and woven fabric. The results thereof are shown in Tables 2 and 3. Incidentally, the average particle size of the composite particles was 150 nm.

Comparative Example 12

A fiber of copolyparaphenylene-3,4'-oxydiphenyleneterephthalamide and a woven fabric thereof were obtained under the same conditions as in Example 8 with the exception that the no composite particles were added. The same evaluation as in Example 8 was made for the resulting fiber and woven fabric. The results thereof are shown in Tables 2 and 3.

Comparative Example 13

A fiber of copolyparaphenylene-3,4'-oxydiphenyleneterephthalamide and a woven fabric thereof were obtained under the same conditions as in Example 10 with the exception that the amount of the composite particles blended into copolyparaphenylene-3,4'-oxydiphenyleneterephthalamide was changed to 0.5% by weight. The same evaluation as in Example 8 was made for the resulting fiber and woven fabric. The results thereof are shown in Tables 2 and 3.

Comparative Example 14

Using a raw material liquid composed of only the tetra(2-ethylhexyl) titanate solution, fine particles of titanium dioxide were obtained in the same manner as in Example 8, and a fiber of copolyparaphenylene-3,4'-oxydiphenyleneterephthalamide to which only the fine titanium dioxide particles were added and a woven fabric thereof were obtained under the same conditions as in Example 8. The same evaluation as in Example 8 was made for the resulting fiber and woven fabric. The results thereof are shown in Tables 2 and 3. Incidentally, the average particle size of the composite particles was 106 nm.

Comparative Example 15

Using a raw material liquid composed of only the octamethylcyclotetrasiloxane solution, fine particles of silicon dioxide were obtained in the same manner as in Example 8, and a fiber of copolyparaphenylene-3,4'-oxydiphenyleneterephthalamide to which only the fine silicon dioxide particles were added and a woven fabric thereof were obtained under the same conditions as in Example 8. The same evaluation as in Example 8 was made for the resulting fiber and woven fabric. The results thereof are shown in Tables 2 and 3. Incidentally, the average particle size of the composite particles was 111 nm.

Comparative Example 16

Using fine particles of magnesium hydroxide (MG-23D manufactured by Kyoritsu Material Co., Ltd.), a fiber of copolyparaphenylene-3,4'-oxydiphenyleneterephthalamide to which only the fine magnesium hydroxide particles were added and a woven fabric thereof were obtained in the same manner as in Example 8. The same evaluation as in Example 8 was made for the resulting fiber. The results thereof are shown in Tables 2 and 3.

Comparative Example 17

Using fine particles of calcium carbonate (CS.3N-A manufactured by Ube Material Industries, Ltd.), a fiber of copolyparaphenylene-3,4'-oxydiphenyleneterephthalamide to which only the fine calcium carbonate particles were added and a woven fabric thereof were obtained in the same manner as in Example 8. The same evaluation as in Example 8 was made for the resulting fiber and woven fabric. The results thereof are shown in Tables 2 and 3.

Comparative Example 18

Using the fine titanium dioxide particles obtained in Comparative Example 14 and the fine silicon dioxide particles obtained in Comparative Example 15 as merely mixed particles, not in a configuration of composite particles, a fiber of copolyparaphenylene-3,4'-oxydiphenyleneterephthalamide to which the mixed particles of the fine titanium dioxide particles and the fine silicon dioxide particles were added and a woven fabric were obtained in the same manner as in Example 8. Incidentally, the ratios of titanium dioxide and silicon dioxide were 20% by weight and 80% by weight, respectively. The same evaluation as in Example 8 was made for the resulting fiber and woven fabric. The results thereof are shown in Tables 2 and 3.
[Table 2]

| | Kind of Particle | TiO$_2$ (wt%) | SiO$_2$ (wt%) | Configuration | Amount Blended (wt%) |
|---|---|---|---|---|---|
| Example 8 | Composite Particle | 10 | 90 | Fiber | 10 |
| Example 9 | Composite Particle | 15 | 85 | Fiber | 10 |
| Example 10 | Composite Particle | 20 | 80 | Fiber | 10 |
| Example 11 | Composite Particle | 25 | 75 | Fiber | 10 |
| Example 12 | Composite Particle | 30 | 70 | Fiber | 10 |
| Example 13 | Composite Particle | 20 | 80 | Fiber | 1 |
| Example 14 | Composite Particle | 20 | 80 | Fiber | 30 |
| Comparative Example 10 | Composite Particle | 40 | 60 | Fiber | 10 |
| Comparative Example 11 | Composite Particle | 60 | 40 | Fiber | 10 |
| Comparative Example 12 | Not added | – | – | Fiber | 0 |
| Comparative Example 13 | Composite Particle | 20 | 80 | Fiber | 0.5 |
| Comparative Example 14 | TiO$_2$ | 100 | – | Fiber | 10 |
| Comparative Example 15 | SiO$_2$ | – | 100 | Fiber | 10 |
| Comparative Example 16 | Mg(OH)$_2$ | – | – | Fiber | 10 |
| Comparative Example 17 | CaCO$_3$ | – | – | Fiber | 10 |
| Comparative Example 18 | Mixed Particle | 20 | 80 | Fiber | 10 |

| | Monofilament Fineness (dtex) | Fiber Strength (cN/dtex) | Fiber Elongation (%) | Strength Retention ($T/T_0$) | Dispersibility (nm) | Limiting Oxygen Index (LOI) |
|---|---|---|---|---|---|---|
| Example 8 | 1.69 | 21.5 | 4.1 | 0.88 | 62 | 30.5 |
| Example 9 | 1.67 | 21.0 | 4.1 | 0.86 | 57 | 31.4 |
| Example 10 | 1.67 | 22.8 | 4.2 | 0.93 | 52 | 32.5 |
| Example 11 | 1.67 | 22.4 | 4.2 | 0.91 | 61 | 33.1 |
| Example 12 | 1.68 | 21.8 | 4.1 | 0.89 | 58 | 31.1 |
| Example 13 | 1.67 | 24.3 | 4.4 | 0.99 | 52 | 30.1 |
| Example 14 | 1.68 | 18.5 | 3.9 | 0.76 | 63 | 38.5 |
| Comparative Example 10 | 1.67 | 21.8 | 4.0 | 0.89 | 62 | 29.8 |
| Comparative Example 11 | 1.67 | 21.4 | 4.1 | 0.87 | 65 | 29.0 |
| Comparative Example 12 | 1.67 | 24.5 | 4.3 | - | - | 25.6 |
| Comparative Example 13 | 1.66 | 24.8 | 4.2 | 1.01 | 42 | 29.1 |
| Comparative Example 14 | 1.67 | 22.1 | 4.3 | 0.90 | 62 | 27.0 |
| Comparative Example 15 | 1.68 | 21.9 | 4.3 | 0.89 | 60 | 27.5 |
| Comparative Example 16 | 1.65 | 15.5 | 3.2 | 0.63 | 550 | 28.4 |
| Comparative Example 17 | 1.67 | 14.7 | 3.0 | 0.60 | 620 | 27.8 |
| Comparative Example 18 | 1.67 | 21.1 | 3.9 | 0.86 | 70 | 29.0 |

[Table 3]

| | Kind of Particle | TiO$_2$ (wt%) | SiO$_2$ (wt%) | Configuration | Amount Blended (wt%) |
|---|---|---|---|---|---|
| Example 8 | Composite Particle | 10 | 90 | Woven Fabric | 10 |
| Example 9 | Composite Particle | 15 | 85 | Woven Fabric | 10 |
| Example 10 | Composite Particle | 20 | 80 | Woven Fabric | 10 |
| Example 11 | Composite Particle | 25 | 75 | Woven Fabric | 10 |
| Example 12 | Composite Particle | 30 | 70 | Woven Fabric | 10 |
| Example 13 | Composite Particle | 20 | 80 | Woven Fabric | 1 |
| Example 14 | Composite Particle | 20 | 80 | Woven Fabric | 30 |
| Comparative Example 10 | Composite Particle | 40 | 60 | Woven Fabric | 10 |
| Comparative Example 11 | Composite Particle | 60 | 40 | Woven Fabric | 10 |
| Comparative Example 12 | Not added | – | – | Woven Fabric | 0 |
| Comparative Example 13 | Composite Particle | 20 | 80 | Woven Fabric | 0.5 |
| Comparative Example 14 | TiO$_2$ | 100 | – | Woven Fabric | 10 |
| Comparative Example 15 | SiO$_2$ | – | 100 | Woven Fabric | 10 |
| Comparative Example 16 | Mg(OH)$_2$ | – | – | Woven Fabric | 10 |
| Comparative Example 17 | CaCO$_3$ | – | – | Woven Fabric | 10 |
| Comparative Example 18 | Mixed Particle | 20 | 80 | Woven Fabric | 10 |

| | Monofilament Fineness (dtex) | Dispersi-bility (nm) | Limiting Oxygen Index (LOI) | Strength Retention $(T/T_0)$ | Hygrothermal Strength Retention (%) | Radiant Heat Resistance $(S/S_0)$ |
|---|---|---|---|---|---|---|
| Example 8 | 1.69 | 62 | 30.5 | 0.8 | 97 | 1.07 |
| Example 9 | 1.67 | 57 | 31.4 | 0.8 | 95 | 1.06 |
| Example 10 | 1.67 | 52 | 32.5 | 0.9 | 96 | 1.07 |
| Example 11 | 1.67 | 61 | 33.1 | 0.8 | 93 | 2.00 |
| Example 12 | 1.68 | 58 | 31.1 | 0.7 | 95 | 1.05 |
| Example 13 | 1.67 | 52 | 30.1 | 0.9 | 98 | 1.05 |
| Example 14 | 1.68 | 63 | 38.5 | 0.8 | 91 | 1.12 |
| Comparative Example 10 | 1.67 | 62 | 29.8 | 0.8 | 97 | 1.01 |
| Comparative Example 11 | 1.67 | 65 | 29.0 | 0.8 | 96 | 1.05 |
| Comparative Example 12 | 1.67 | – | 25.6 | 0.8 | 99 | – |
| Comparative Example 13 | 1.66 | 42 | 29.1 | 0.7 | 98 | 1.00 |
| Comparative Example 14 | 1.67 | 62 | 27.0 | 0.8 | 88 | 1.08 |
| Comparative Example 15 | 1.68 | 60 | 27.5 | 0.8 | 91 | 1.07 |
| Comparative Example 16 | 1.65 | 550 | 28.4 | 0.5 | 92 | – |
| Comparative Example 17 | 1.67 | 620 | 27.8 | 0.4 | 91 | – |
| Comparative Example 18 | 1.67 | 70 | 29.0 | 0.5 | 90 | 1.04 |

EP 2 256 168 B1

According to Tables 2 and 3, the fiber of Comparative Example 12 containing no additive (the fiber of 100% copolyparaphenylene-3,4'-oxydiphenyleneterephthalamide) and the cloth thereof had a limiting oxygen index (LOI) of 25.6, whereas the fibers and cloths of Examples 8 to 12 had a limiting oxygen index (LOI) of 30.5 to 33.1, and were largely improved in the limiting oxygen index (LOI) compared to the fiber and cloth of the above-mentioned Comparative Example. The rate of increase thereof was 19% or more.

At this time, the amount of the composite particles blended into copolyparaphenylene-3,4'-oxydiphenyleneterephthalamide as the polymer is as considerably small as 10% by weight compared to the amount of a flame retardant blended, which has been conventionally used. Incidentally, in the fiber and cloth of Comparative Example 16 or 17 to which magnesium hydroxide or calcium carbonate was added, a little increase in the limiting oxygen index (LOI) was observed when compared to the fiber and cloth of Comparative Example 12. However, the rate of increase thereof was only about 10%. When the amount blended into the polymer is 10% by weight, the effect can not be sufficiently exerted.

From the above, in the flame-retardant fiber and heat-resistant cloth of the present invention, it has been confirmed that high flame retardancy can be imparted, even when the amount of the composite particles of the present invention blended into the polymer is small.

Further, in the fiber of Comparative Example 14 or 15 to which titanium dioxide or silicon dioxide was separately added and the cloth thereof, and in the fiber of Comparative Example 18 in which the fine titanium dioxide particles and the fine silicon dioxide particles were merely mixed and the cloth thereof, an increase in the limiting oxygen index (LOI) was also observed when compared to the fiber and cloth of Comparative Example 12. However, the rate of increase thereof was only about 13%. This shows that the use of the composite particles mainly composed of titanium dioxide and silicon dioxide causes titanium dioxide and silicon dioxide to exert a synergistic effect in a form of some kind to further impart flame retardancy to the fiber and cloth, although a detailed mechanism is not clear.

Further, as known from the limiting oxygen index (LOI) of the fibers and cloths of Examples 8 to 12 and Comparative Examples 10 and 11, the ratio of the contents of titanium dioxide and silicon dioxide in the composite particles can be within the range of 10 to 60% by weight for titanium dioxide and within the range of 90 to 40% by weight for silicon dioxide, in order to impart certain flame retardancy to the fiber and cloth. However, the fibers and cloths of Comparative Examples 10 and 11 increase only about 16% in the limiting oxygen index (LOI), compared to the fiber and cloth of Comparative Example 12. In contrast to this, the fibers and cloth of Examples 8 to 12 largely increase 19% or more as described above. This shows that particularly excellent flame retardancy can be imparted to the resulting fiber and cloth by adjusting the ratio of the contents of titanium dioxide and silicon dioxide in the composite particles to 10 to 30% by weight for titanium dioxide and 90 to 70% by weight for silicon dioxide.

Furthermore, the fiber and cloth of Example 13 in which the amount of the composite particles blended into the fiber and cloth is 1% by weight also increases in the limiting oxygen index (LOI), compared to Comparative Example 12. This shows that the flame-retardant fiber and cloth of the present invention provides the fiber and cloth which can impart high flame retardancy while substantially decreasing the amount of flame retardant blended, compared to the conventional ones.

Incidentally, as known from the limiting oxygen index (LOI) of the fiber and cloth of Example 14, it goes without saying that the more the amount of the composite particles blended is, the more flame retardancy is improved. However, on the other hand, there is also a problem that the more the amount of the composite particles blended is increased, the more mechanical strength of the fiber and cloth decreases. The flame-retardant fiber and cloth of the present invention can impart flame retardancy, even when the amount of the composite particles blended is small. Accordingly, comprehensively considering performance required for the fiber and cloth, it is possible to determine such an amount blended that both flame retardancy and mechanical strength can be satisfied. In accordance with the intended use, therefore, the degree of freedom of design of the resulting fiber and cloth can be increased.

Industrial Applicability

The flame-retardant resin composition of the present invention is useful for applications in various resin formed articles, as well as films, fibers and synthetic pulps having excellent flame retardancy.

Further, the flame-retardant fiber and heat-resistant cloth of the present invention have excellent flame retardancy, and are useful for applications in welding protective clothing, furnace clothing and heat-resistant protective clothing in factories or gas stations.

**Claims**

1. A flame-retardant resin composition comprising a resin and composite particles in an amount of 1% by weight or more based on the resin, which are mainly composed of titanium dioxide and silicon dioxide and have a titanium dioxide content of 10 to 30% by weight and a silicon dioxide content of 70 to 90% by weight, wherein the resin is an aromatic polyamide.

2. The flame-retardant resin composition according to claim 1, which has a limiting oxygen index (LOI) of 30 or more.

3. The flame-retardant resin composition according to claim 1, wherein each of the composite particles has a core composed of titanium dioxide and a covering layer of silicon dioxide.

4. The flame-retardant resin composition according to claim 3, wherein each of the composite particles further has a surface treatment layer.

5. The flame-retardant resin composition according to claim 4, wherein the surface treatment layer is composed of a silane-based coupling agent.

6. The flame-retardant resin composition according to claim 4, wherein the dispersed particle average corresponding size of the composite particles in the flame-retardant resin composition is within the range of 10 to 200 nm.

7. A flame-retardant fiber obtained by fiberizing the flame-retardant resin composition according to any one of claims 1 to 6, which comprises composite particles in the fiber in an amount of 1 to 30% by weight, which are mainly composed of titanium dioxide and silicon dioxide and have a titanium dioxide content of 10 to 30% by weight and a silicon dioxide content of 70 to 90% by weight.

8. The flame-retardant fiber according to claim 7, which has a limiting oxygen index (LOI) of 30 or more.

9. The flame-retardant fiber according to claim 7, wherein taking the tensile strength of the fiber as (T) and the tensile strength of a comparative fiber composed of the same fiber as the fiber except that it contains no composite particles as $(T_0)$, the ratio $(T/T_0)$ is 0.7 or more.

10. The flame-retardant fiber according to claim 7, which is draw oriented.

11. The flame-retardant fiber according to claim 7, wherein the dispersed particle average corresponding size of the composite particles in the flame-retardant fiber is within the range of 10 to 200 nm.

12. The flame-retardant fiber according to claim 7, which has a monofilament fineness of 0.5 to 50 dtex.

13. A heat-resistant cloth using the flame-retardant fiber according to claim 7.

14. The heat-resistant cloth according to claim 13, which has a limiting oxygen index (LOI) of 30 or more.

15. The heat-resistant cloth according to claim 13, which comprises the fiber according to claim 7 and another fiber, and has a limiting oxygen index (LOI) of 28 or more.

16. The heat-resistant cloth according to claim 13, wherein the hygrothermal strength retention $(D/D_0)$ after 100 hours under a circumstance of a temperature of 80°C and a humidity of 95% is 90% or more.

17. The heat-resistant cloth according to claim 13, wherein taking the tensile strength of the heat-resistant cloth containing the composite particles as (T) and the tensile strength of a comparative cloth composed of the same fiber as the fiber except that it contains no composite particles as $(T_0)$, the strength retention represented by the ratio $(T/T_0)$ is 0.7 or more.

18. Heat-resistant protective clothing comprising at least a front fabric layer, wherein the heat-resistant cloth according to claim 13 is used as the front fabric layer.

19. Heat-resistant protective clothing having a composite structure comprising a front fabric layer and a back fabric layer, wherein the heat-resistant cloth according to claim 13 is used as at least one layer of the front fabric layer and the back fabric layer.

20. Heat-resistant protective clothing having a composite structure comprising a front fabric layer, an intermediate layer and a back fabric layer, wherein the heat-resistant cloth according to claim 13 is used as at least one layer of the front fabric layer and the back fabric layer.

21. The heat-resistant protective clothing according to claim 18, wherein the heat-resistant cloth used as the front fabric layer, and taking the time reaching a second-degree burn of the heat-resistant cloth containing the composite particles as (S) and the time reaching a second-degree burn of the heat-resistant cloth containing no composite particles as ($S_0$), the radiant heat resistance represented by the ratio ($S/S_0$) is 1.04 or more.

**Patentansprüche**

1. Flammhemmende Harzzusammensetzung, umfassend ein Harz und Verbundstoffteilchen in einer Menge von 1 Gew.-% oder mehr, basierend auf dem Harz, die hauptsächlich zusammengesetzt ist aus Titandioxid und siliciumdioxid und einen Titandioxidgehalt von 10 bis 30 Gew.-% und einen Siliciumdioxidgehalt von 70 bis 90 Gew.-% aufweist, wobei das Harz ein aromatisches Polyamid ist.

2. Flammhemmende Harzzusammensetzung nach Anspruch 1, die einen Limiting Oxygen Index (LOI = Sauerstoffbedarf) von 30 oder mehr aufweist.

3. Flammhemmende Harzzusammensetzung nach Anspruch 1, wobei jedes Verbundstoffteilchen einen Kern aufweist, der aus Titandioxid und einer Deckschicht aus siliciumdioxid zusammengesetzt ist.

4. Flammhemmende Harzzusammensetzung nach Anspruch 3, wobei jedes Verbundstoffteilchen ferner eine Oberflächenbehandlungsschicht aufweist.

5. Flammhemmende Harzzusammensetzung nach Anspruch 4, wobei die Oberflächenbehandlungsschicht aus einem Kopplungsmittel auf Silanbasis zusammengesetzt ist.

6. Flammhemmende Harzzusammensetzung nach Anspruch 4, wobei die dem dispergierten Teilchendurchschnitt entsprechende Größe der Verbundstoffteilchen in der flammhemmenden Harzzusammensetzung in einem Bereich von 10 bis 200 nm liegt.

7. Flammhemmende Faser, die durch Zerfaserung der flammhemmenden Harzzusammensetzung nach einem der vorhergehenden Ansprüche 1 bis 6 erhalten wird und die Verbundstoffteilchen in der Faser in einer Menge von 1 bis 30 Gew.-% umfasst, die hauptsächlich aus Titandioxid und Siliciumdioxid zusammengesetzt sind und einen Titandioxidgehalt von 10 bis 30 Gew.-% und einen Siliciumdioxidgehalt von 70 bis 90 Gew. -% aufweisen.

8. Flammhemmende Faser nach Anspruch 7, die einen Limiting Oxygen Index (LOI = Sauerstoffbedarf) von 30 oder mehr aufweist.

9. Flammhemmende Faser nach Anspruch 7, wobei unter Zugrundelegen der Zugfestigkeit der Faser als (T) und der Zugfestigkeit einer vergleichbaren Faser, die aus der gleichen Faser wie die Faser zusammengesetzt ist, außer dass diese keine Verbundstoffteilchen enthält, als ($T_0$), das Verhältnis von ($T/T_0$) 0,7 oder mehr beträgt.

10. Flammhemmende Faser nach Anspruch 7, die zuggerichtet ist.

11. Flammhemmende Faser nach Anspruch 7, wobei die dem dispergierten Teilchendurchschnitt entsprechende Größe der Verbundstoffteilchen in der flammhemmenden Faser in dem Bereich von 10 bis 200 nm liegt.

12. Flammhemmende Faser nach Anspruch 7, die eine Monofilament-Feinheit von 0,5 bis 50 dtex aufweist.

13. Wärmebeständiges Gewebe, das die flammhemmende Faser nach Anspruch 7 verwendet.

14. Wärmebeständiges Gewebe nach Anspruch 13, das einen Limiting Oxygen Index (LOI = Sauerstoffbedarf) von 30 oder mehr aufweist.

15. wärmebeständiges Gewebe nach Anspruch 13, das die Faser nach Anspruch 7 und eine andere Faser umfasst und einen Limiting Oxygen Index (LOI) von 28 oder mehr aufweist.

16. Wärmebeständiges Gewebe nach Anspruch 13, wobei die hygrothermische Reißfestigkeit ($D/D_0$) nach 100 Stunden unter einer Bedingung einer Temperatur von 80 °C und einer Feuchtigkeit von 95 % 90 % oder mehr beträgt.

17. Wärmbeständiges Gewebe nach Anspruch 13, wobei unter Zugrundelegen der Zugfestigkeit des wärmebeständigen Gewebes, das die Verbundstoffteilchen enthält, als (T) und der Zugfestigkeit eines vergleichbaren Gewebes, das aus der gleichen Faser wie die Faser zusammengesetzt ist, außer dass dieses keine Verbundstoffteilchen enthält, als ($T_0$), das Verhältnis von ($T/T_0$) 0,7 oder mehr beträgt.

18. Wärmebeständige Schutzkleidung, umfassend mindestens eine vordere Stoffschicht, wobei das wärmbeständige Gewebe nach Anspruch 13 als vordere Stoffschicht verwendet wird.

19. Wärmebeständige Schutzkleidung mit einer Verbundstoffstruktur, umfassend eine vordere Stoffschicht und eine hintere Stoffschicht, wobei das wärmebeständige Gewebe nach Anspruch 13 mindestens als eine Schicht der vorderen Stoffschicht und der hinteren Stoffschicht verwendet wird.

20. wärmebeständige Schutzkleidung mit einer Verbundstoffstruktur, umfassend eine vordere Stoffschicht, eine Zwischenschicht und eine hintere Stoffschicht, wobei das wärmebeständige Gewebe nach Anspruch 13 mindestens als eine Schicht der vorderen Stoffschicht und der hinteren Stoffschicht verwendet wird.

21. Wärmebeständige Schutzkleidung nach Anspruch 18, wobei das wärmebeständige Gewebe als die vordere Stoffschicht verwendet wird und unter Zugrundelegen der Zeit, die eine Verbrennung zweiten Grades des wärmebeständigen Gewebes erreicht, das die Verbundstoffteilchen enthält, als (S), und der Zeit, die eine Verbrennung zweiten Grades des wärmebeständigen Gewebes ohne Verbundstoffteilchen erreicht, als ($S_0$), die Strahlungswärmebeständigkeit, die von dem Verhältnis ($S/S_0$) repräsentiert wird, 1,04 oder mehr beträgt.

**Revendications**

1. Composition de résine ignifuge comprenant une résine et des particules composites dans une quantité d'au moins 1% en poids par rapport à la résine, lesquelles sont principalement composées de dioxyde de titane et de dioxyde de silicium et ont une teneur en dioxyde de titane de 10 à 30 % en poids et une teneur en dioxyde de silicium de 70 à 90 % en poids, la résine étant un polyamide aromatique.

2. Composition de résine ignifuge selon la revendication 1, qui a un indice limite d'oxygène (ILO) d'au moins 30.

3. Composition de résine ignifuge selon la revendication 1, dans laquelle chacune des particules composites a un coeur composé de dioxyde de titane et une couche d'enrobage en dioxyde de silicium.

4. Composition de résine ignifuge selon la revendication 3, dans laquelle chacune des particules composites comporte en outre une couche de traitement de surface.

5. Composition de résine ignifuge selon la revendication 4, dans laquelle la couche de traitement de surface est composée d'un agent de couplage à base de silane.

6. Composition de résine ignifuge selon la revendication 4, dans laquelle la taille moyenne de particules dispersées correspondante des particules composites dans la composition de résine ignifuge se situe dans la gamme de 10 à 200 nm.

7. Fibre ignifuge obtenue en défibrant la composition de résine ignifuge selon l'une quelconque des revendications 1 à 6, qui comprend des particules composites dans la fibre dans une quantité de 1 à 30 % en poids, lesquelles sont principalement composées de dioxyde de titane et de dioxyde de silicium et ont une teneur en dioxyde de titane de 10 à 30 % en poids et une teneur en dioxyde de silicium de 70 à 90 % en poids.

8. Fibre ignifuge selon la revendication 7, qui a un indice limite d'oxygène (ILO) d'au moins 30.

9. Fibre ignifuge selon la revendication 7, dans laquelle si on désigne la résistance à la traction de la fibre par (T) et la résistance à la traction d'une fibre comparative composée de la même fibre excepté qu'elle ne contient pas de particules composites par ($T_0$), le rapport ($T/T_0$) vaut au moins 0,7.

**10.** Fibre ignifuge selon la revendication 7, qui est orientée par étirage.

**11.** Fibre ignifuge selon la revendication 7, dans laquelle la taille moyenne de particules dispersées correspondante des particules composites dans la fibre ignifuge se situe dans la gamme de 10 à 200 nm.

**12.** Fibre ignifuge selon la revendication 7, qui a une finesse de monofilament de 0,5 à 50 dtex.

**13.** Etoffe résistante à la chaleur utilisant la fibre ignifuge selon la revendication 7.

**14.** Etoffe résistante à la chaleur selon la revendication 13, qui a un indice limite d'oxygène (ILO) d'au moins 30.

**15.** Etoffe résistante à la chaleur selon la revendication 13, qui comprend la fibre selon la revendication 7 et une autre fibre, et a un indice limite d'oxygène (ILO) d'au moins 28.

**16.** Etoffe résistante à la chaleur selon la revendication 13, dans laquelle la conservation de la résistance hygrothermique ($D/D_0$) après 100 heures dans les circonstances d'une température de 80°C et d'une humidité de 95 % est d'au moins 90 %.

**17.** Etoffe résistante à la chaleur selon la revendication 13, dans laquelle si on désigne la résistance à la traction de l'étoffe résistante à la chaleur contenant les particules composites par (T) et la résistance à la traction d'une étoffe comparative composée de la même fibre excepté qu'elle ne contient pas de particules composites par ($T_0$), la conservation de la résistance représentée par le rapport ($T/T_0$) vaut au moins 0,7.

**18.** Vêtement de protection résistant à la chaleur comprenant au moins une couche de tissu avant, dans lequel l'étoffe résistante à la chaleur selon la revendication 13 est utilisée comme couche de tissu avant.

**19.** Vêtement de protection résistant à la chaleur ayant une structure composite comprenant une couche de tissu avant et une couche de tissu arrière, dans lequel l'étoffe résistante à la chaleur selon la revendication 13 est utilisée comme couche de tissu avant et/ou couche de tissu arrière.

**20.** Vêtement de protection résistant à la chaleur ayant une structure composite comprenant une couche de tissu avant, une couche intermédiaire et une couche de tissu arrière, dans lequel l'étoffe résistante à la chaleur selon la revendication 13 est utilisée comme couche de tissu avant et/ou couche de tissu arrière.

**21.** Vêtement de protection résistant à la chaleur selon la revendication 18, dans lequel l'étoffe résistante à la chaleur est utilisée comme couche de tissu avant, et si on désigne le temps pour atteindre une brûlure du second degré de l'étoffe résistante à la chaleur contenant les particules composites par (S) et le temps pour atteindre une brûlure du second degré de l'étoffe résistante à la chaleur ne contenant pas de particules composites par ($S_0$), la résistance à la chaleur rayonnante représentée par le rapport ($S/S_0$) vaut au moins 1,04.

[Fig.1]

(a)

(b)

(o)

[Fig.2]

[Fig.3]

(a)

(b)

[Fig.4]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007177369 A
- JP 2007056392 A
- JP 2006299472 A
- JP 3514399 B
- JP 47010863 B
- JP 48017551 B
- JP 50052167 A
- JP 56031009 A
- JP 8074121 A
- JP 10088421 A
- JP 2001348726 A
- JP 53122817 A
- JP 11100499 A
- JP 2006124698 A